# EUROPEAN PATENT APPLICATION

(11) **EP 4 622 331 A1**
(43) Date of publication of application: **24.09.2025**
(21) Application number: 24741376.8
(22) Date of filing: 12.01.2024
(51) Int. Cl.: H04W 24/10

(54) **INFORMATION TRANSMISSION METHOD AND APPARATUS**

(30) Priority: 13.01.2023 CN 202310081231
(71) Applicant: Huawei Technologies Co., Ltd., Shenzhen, Guangdong 518129 (CN)
(72) Inventor: WU, Kuan, Shenzhen, Guangdong 518129 (CN); HUANG, Lei, Shenzhen, Guangdong 518129 (CN); LIU, Peng, Shenzhen, Guangdong 518129 (CN); YANG, Xun, Shenzhen, Guangdong 518129 (CN)
(74) Representative: Grünecker Patent- und Rechtsanwälte PartG mbB
(86) International application number: PCT/CN2024/072050
(87) International publication number: WO 2024/149382

(57) **Abstract**

This application provides an information transmission method and an apparatus, and relates to the field of wireless communication technologies. This application is applied to an ultra-wideband UWB-based wireless personal area network system, that supports 802.15 series protocols, for example, an 802.15.4a protocol, an 802.15.4z protocol, or an 802.15.4ab protocol; and may be further applied to a wireless local area network system that supports 802.11 series protocols such as a next-generation Wi-Fi protocol of IEEE 802.11ax like 802.11be or EHT, and a next-generation protocol of 802.11be like Wi-Fi 8; a sensing system; or the like. In the method, when sending a measurement result to a first communication apparatus, a second communication apparatus may indicate a type of the measurement result to the first communication apparatus. This can reduce NB signal consumption, meet a duty cycle requirement of an NB signal, and reduce energy consumption of receiving and processing of the first communication apparatus.

## Description

### CROSS-REFERENCE TO RELATED APPLICATIONS

This application claims priority to Chinese Patent Application No. 202310081231.9, filed with the China National Intellectual Property Administration on January 13, 2023 and entitled "INFORMATION TRANSMISSION METHOD AND APPARATUS", which is incorporated herein by reference in its entirety.

### TECHNICAL FIELD

This application relates to the field of wireless communication technologies, and in particular, to an information transmission method and an apparatus.

### BACKGROUND

An ultra-wideband (UWB) technology is a wireless communication and sensing/ranging technology in which a nanosecond-level wireless non-sinusoidal narrow impulse is used for signal transmission. Therefore, the ultra-wideband technology occupies a wide spectrum range. Due to a narrow impulse and extremely low radiation spectral density of the ultra-wideband technology, a UWB system has advantages such as a strong multipath resolution capability, low power consumption, and high confidentiality, and has attracted wide attention in the industry.

A single sensing/ranging process is defined as a measurement round (measurement round). A minimum processing time unit of each measurement round is a measurement slot (measurement slot). One measurement round is divided into three phases: a measurement control phase (measurement control phase), a measurement phase (measurement phase), and a measurement report phase (measurement report phase). In the measurement report phase, a measurement responder may send a measurement report (report) message to a measurement initiator, or a measurement initiator may send a measurement report message to a measurement responder. The measurement report message may include a measurement result, and is usually carried by a narrowband (narrowband, NB) signal.

Currently, the measurement report message sent by the measurement responder or the measurement initiator may include all types of measurement results obtained through measurement. In other words, in the current measurement report phase, all the types of measurement results obtained through measurement by the measurement responder or the measurement initiator need to be placed in one measurement report message, and reported via the NB signal. However, in a transmission method of the measurement report message, NB signal consumption is increased, and energy consumption of receiving and processing of the measurement initiator or a measurement responder is increased.

### SUMMARY

This application provides an information transmission method and an apparatus, to reduce narrowband signal consumption and reduce energy consumption of receiving and processing of a device.

According to a first aspect, an information transmission method is provided. The method may be performed by a second communication apparatus or a chip/chip system. In the method, the second communication apparatus may receive a first UWB signal from a first communication apparatus, where the first UWB signal is used for one or more of ranging, positioning, or sensing. The second communication apparatus may send first information to the first communication apparatus, where the first information includes second information and a measurement result, and the second information indicates a type of the measurement result. The measurement result is obtained by measuring the first UWB signal.

Based on this solution, when sending the measurement result to the first communication apparatus, the second communication apparatus may indicate the type of the measurement result to the first communication apparatus. In this way, different types of measurement results can be respectively transmitted via different messages. This reduces NB signal consumption, meets a duty cycle requirement of an NB signal, and reduces energy consumption of receiving and processing of the first communication apparatus.

In a possible implementation, the type includes one or more of a time of flight, a reply time, a round trip time, and a gap of reply time correction.

In a possible implementation, the first information includes a frame length field and a message identification field, and the frame length field and the message identification field indicate that the first information includes the second information.

Based on the foregoing solution, whether the first information includes the second information is indicated to the first communication apparatus, so that the first communication apparatus can determine whether the measurement result is transmitted via different messages, to determine whether there is subsequent message transmission. This improves receiving and processing flexibility of the first communication apparatus. In addition, whether the first information includes the second information is indicated by the frame length field and the message identification field. This can reduce consumption of a value state of the message identification field, can avoid NB signal consumption caused by increasing a length of the message identification field, and can meet a duty cycle requirement of an NB signal.

In a possible implementation, the second information includes a first field, and the first field indicates that the measurement result is not segmented. Alternatively, the second information includes a second field, and the second field indicates that the first information carries an i^{th} subpart obtained by segmenting the measurement result into a plurality of subparts, where i is a positive integer.

Based on the foregoing solution, the measurement result may be segmented, and the subparts obtained through segmentation are carried in different messages. This can meet a duty cycle requirement of an NB signal, and can reduce NB signal consumption.

In a possible implementation, the first information further includes third information, the third information indicates a number of fragments of a second UWB signal, the second UWB signal is used for one or more of ranging, positioning, or sensing, and a sending time of the second UWB signal is later than a sending time of the first UWB signal.

Based on the foregoing solution, the second communication apparatus updates and adjusts an inappropriate number of fragments of a UWB signal to an appropriate number of fragments of the UWB signal in a timely manner based on actual measurement effect of a current measurement round, and indicates the number of fragments of the UWB signal to the first communication apparatus based on the third information. This avoids a waste of an excessive time in subsequent consecutive measurement processes, thereby improving system efficiency.

In a possible implementation, the first information further includes control information, and the control information indicates that the first information includes the third information.

Based on the foregoing solution, the first communication apparatus may determine, based on the control information included in the first information, whether the first information includes the third information, to determine whether the number of fragments of the UWB signal needs to be adjusted.

According to a second aspect, an information transmission method is provided. The method may be performed by a second communication apparatus or a chip/chip system. In the method, the second communication apparatus receives first information from a first communication apparatus, where the first information is used to trigger one or more of ranging, positioning, or sensing. The first information further includes second information, and the second information is used to request a number of fragments of a UWB signal. The UWB signal is used for one or more of ranging, positioning, or sensing. The second communication apparatus sends the number of fragments of the UWB signal to the first communication apparatus.

Based on this solution, the first communication apparatus requests the number of fragments of the UWB signal from the second communication apparatus. Therefore, the number of fragments of the UWB signal sent by the second communication apparatus is controlled by the first communication apparatus. This can reduce interference, caused by a process of exchanging the number of fragments of the UWB signal, to NB signal receiving of another device.

In a possible implementation, the first information further includes third information, and the third information indicates channel occupation of a non-UWB signal. For example, the third information indicates channel occupation of a Wi-Fi signal, a Bluetooth signal, or the like. Based on this solution, the channel occupation of the non-UWB signal is indicated by the third information. This can avoid a conflict with the non-UWB signal when the first communication apparatus and the second communication apparatus communicate based on the UWB signal, and can mitigate interference between the UWB signal and the non-UWB signal.

In a possible implementation, the third information includes an NB channel map, and the NB channel map indicates the channel occupation of the non-UWB signal.

In a possible implementation, the second communication apparatus may determine, based on cyclic redundancy check (cyclic redundancy check, CRC) information of the first information, that the first information includes the second information. Based on this solution, whether the first information includes the second information is determined based on the CRC information. This can avoid a case in which a field is added to the first information to indicate whether the first information includes the second information, and can reduce NB signal consumption.

In a possible implementation, the first information includes a frame length field and a message identification field, and the frame length field and the message identification field indicate that the first information includes the second information. Based on this solution, whether the first information includes the second information is indicated by the frame length field and the message identification field. This can avoid a case in which a field is added to the first information to indicate whether the first information includes the second information, and can reduce NB signal consumption. In addition, whether the first information includes the second information is indicated by the frame length field and the message identification field. This can reduce consumption of a value state of the message identification field, can avoid NB signal consumption caused by increasing a length of the message identification field, and can meet a duty cycle requirement of an NB signal.

According to a third aspect, an information transmission method is provided. The method may be performed by a first communication apparatus or a chip/chip system. In the method, the first communication apparatus sends a first UWB signal to a second communication apparatus, where the first UWB signal is used for one or more of ranging, positioning, or sensing. The first communication apparatus receives first information from the second communication apparatus, where the first information includes second information and a measurement result, and the second information indicates a type of the measurement result. The measurement result is obtained by the seccond communication apparatus measuring the first UWB signal.

In a possible implementation, the type includes one or more of a time of flight, a reply time, a round trip time, and a gap of reply time correction.

In a possible implementation, the first information includes a frame length field and a message identification field, and the frame length field and the message identification field indicate that the first information includes the second information.

In a possible implementation, the second information includes a first field, and the first field indicates that the measurement result is not segmented. Alternatively, the second information includes a second field, and the second field indicates that the first information carries an i^{th} subpart obtained by segmenting the measurement result into a plurality of subparts, where i is a positive integer.

In a possible implementation, the first information further includes third information, the third information indicates a number of fragments of a second UWB signal, and the second UWB signal is used for one or more of ranging, positioning, or sensing. A sending time of the second UWB signal is later than a sending time of the first UWB signal.

In a possible implementation, the first information further includes control information, and the control information indicates that the first information includes the third information.

According to a fourth aspect, an information transmission method is provided. The method may be performed by a first communication apparatus or a chip/chip system. In the method, the first communication apparatus sends first information to a second communication apparatus, where the first information is used to trigger one or more of ranging, positioning, or sensing. The first information further includes second information, the second information is used to request a number of fragments of a UWB signal, and the UWB signal is used for one or more of ranging, positioning, or sensing. The first communication apparatus receives the number of fragments of the UWB signal from the second communication apparatus.

In a possible implementation, the first information further includes third information, and the third information indicates channel occupation of a non-UWB signal. Specifically, the third information may include an NB channel map, and the NB channel map indicates the channel occupation of the non-UWB signal.

In a possible implementation, CRC information of the first information indicates that the first information includes the second information.

In a possible implementation, the first information includes a frame length field and a message identification field, and the frame length field and the message identification field indicate that the first information includes the second information.

According to a fifth aspect, a communication apparatus is provided, including a processing unit and a transceiver unit. The transceiver unit is configured to receive a first UWB signal from a first communication apparatus, where the first UWB signal is used for one or more of ranging, positioning, or sensing. The processing unit is configured to measure the first UWB signal to obtain a measurement result. The transceiver unit is further configured to send first information to the first communication apparatus, where the first information includes second information and a measurement result, and the second information indicates a type of the measurement result. The type of the measurement result includes but is not limited to one or more of a time of flight, a reply time, a round trip time, and a gap of reply time correction.

In a possible implementation, the first information includes a frame length field and a message identification field, and the frame length field and the message identification field indicate that the first information includes the second information.

In a possible implementation, the second information includes a first field, and the first field indicates that the measurement result is not segmented. Alternatively, the second information includes a second field, and the second field indicates that the first information carries an i^{th} subpart obtained by segmenting the measurement result into a plurality of subparts, where i is a positive integer.

In a possible implementation, the first information further includes third information, the third information indicates a number of fragments of a second UWB signal, and the second UWB signal is used for one or more of ranging, positioning, or sensing. A sending time of the second UWB signal is later than a sending time of the first UWB signal.

In a possible implementation, the first information further includes control information, and the control information indicates that the first information includes the third information.

According to a sixth aspect, a communication apparatus is provided, including a processing unit and a transceiver unit. The transceiver unit is configured to receive first information from a first communication apparatus, where the first information is used to trigger one or more of ranging, positioning, or sensing. The first information further includes second information, the second information is used to request a number of fragments of a UWB signal, and the UWB signal is used for one or more of ranging, positioning, or sensing. The processing unit is configured to determine the number of fragments of the UWB signal. The transceiver unit is further configured to send the number of fragments of the UWB signal to the first communication apparatus.

In a possible implementation, the first information further includes third information, and the third information indicates channel occupation of a non-UWB signal. Specifically, the third information may include an NB channel map, and the NB channel map indicates the channel occupation of the non-UWB signal.

In a possible implementation, the processing unit is further configured to determine, based on CRC information of the first information, that the first information includes the second information.

In a possible implementation, the first information includes a frame length field and a message identification field, and the frame length field and the message identification field indicate that the first information includes the second information.

According to a seventh aspect, a communication apparatus is provided, including a processing unit and a transceiver unit. The processing unit is configured to generate a first UWB signal. The transceiver unit is configured to send the first UWB signal to a second communication apparatus, where the first UWB signal is used for one or more of ranging, positioning, or sensing. The transceiver unit is further configured to receive first information from the second communication apparatus, where the first information includes second information and a measurement result, and the second information indicates a type of the measurement result. The measurement result is obtained by measuring the first UWB signal. The type of the measurement result may include but is not limited to one or more of a time of flight, a reply time, a round trip time, and a gap of reply time correction.

In a possible implementation, the first information includes a frame length field and a message identification field, and the frame length field and the message identification field indicate that the first information includes the second information.

In a possible implementation, the second information includes a first field, and the first field indicates that the measurement result is not segmented. Alternatively, the second information includes a second field, and the second field indicates that the first information carries an i^{th} subpart obtained by segmenting the measurement result into a plurality of subparts, where i is a positive integer.

In a possible implementation, the first information further includes third information, the third information indicates a number of fragments of a second UWB signal, and the second UWB signal is used for one or more of ranging, positioning, or sensing. A sending time of the second UWB signal is later than a sending time of the first UWB signal.

In a possible implementation, the first information further includes control information, and the control information indicates that the first information includes the third information.

According to an eighth aspect, a communication apparatus is provided, including a processing unit and a transceiver unit. The processing unit is configured to generate first information. The transceiver unit is configured to send the first information to a second communication apparatus, where the first information is used to trigger one or more of ranging, positioning, or sensing. The first information further includes second information, the second information is used to request a number of fragments of a UWB signal, and the UWB signal is used for one or more of ranging, positioning, or sensing. The transceiver unit is further configured to receive the number of fragments of the UWB signal from the second communication apparatus.

In a possible implementation, the first information further includes third information, and the third information indicates channel occupation of a non-UWB signal. Specifically, the third information includes an NB channel map, and the NB channel map indicates the channel occupation of the non-UWB signal.

In a possible implementation, CRC information of the first information indicates that the first information includes the second information.

For technical effect that can be achieved by the design in any one of the third aspect to the eighth aspect, refer to the descriptions of technical effect that can be achieved by the corresponding design in the first aspect and the second aspect, and no repeated description is provided.

### BRIEF DESCRIPTION OF DRAWINGS

FIG. 1 is a diagram of a communication system according to an embodiment of this application;
FIG. 2 is a diagram of a star topology according to an embodiment of this application;
FIG. 3 is a diagram of a mesh topology according to an embodiment of this application;
FIG. 4 is a diagram of UWB fragments according to an embodiment of this application;
FIG. 5 is a diagram of a measurement round according to an embodiment of this application;
FIG. 6 is a diagram of a measurement process according to an embodiment of this application;
FIG. 7 is an example flowchart of an information transmission method according to an embodiment of this application;
FIG. 8 is an example flowchart of an information transmission method according to an embodiment of this application;
FIG. 9 is a diagram of a communication apparatus according to an embodiment of this application;
FIG. 10 is a diagram of a communication apparatus according to an embodiment of this application;
FIG. 11 is a diagram of a communication apparatus according to an embodiment of this application; and
FIG. 12 is a diagram of a communication apparatus according to an embodiment of this application.

### DESCRIPTION OF EMBODIMENTS

For ease of understanding of the technical solutions provided in embodiments of this application, the following explains and describes technical terms in embodiments of this application.
(1) Sensing may also be referred to as sensing measurement or radio sensing, means that a transmitter and a receiver transmit a signal to discover a target or determine a target state. Wireless local area network (wireless local area network, WLAN) sensing means that a station (station, STA) with a WLAN sensing capability uses a received WLAN signal to detect a feature of an expected target in a given environment. For example, the feature includes one or more of a range, a speed, an angle, motion, existence or proximity, a gesture, and the like. The target includes one or more of an object, a person, an animal, and the like. The environment includes one or more of a room, a house, a vehicle, an enterprise, and the like.

For example, the transmitter may send a signal used for sensing measurement to the receiver, and the receiver may measure the signal to obtain a channel estimation result, for example, channel state information (channel state information, CSI). The receiver may perform sensing based on the CSI. Alternatively, the receiver may send the channel estimation result to the transmitter, and the transmitter performs target sensing or target state sensing based on the channel estimation result. For example, the receiver or the transmitter may process the CSI, to determine whether a moving object exists in the environment. For example, it is assumed that a moving target exists in the environment. Motion of the target affects an amplitude, a frequency, and the like of a PPDU in a period of time, and the impact is reflected in the CSI in the period of time. Therefore, the receiver or the transmitter may determine, based on the CSI, whether the moving object exists in the environment. During sensing, devices that participate in sensing are mainly as follows:
A sensing initiator is a device that initiates a sensing procedure.

A sensing responder is a device that responds to sensing initiated by the sensing initiator and participates in sensing.

A sensing transmitter is a device that sends a sensing signal, where the sensing signal may be a signal used for sensing measurement, and the sensing receiver may measure the sensing signal.

A sensing receiver is a device that receives the sensing signal.

(2) Ranging means that a transmitter and a receiver transmit a signal to measure a distance between the transmitter and the receiver. Optionally, a location of the transmitter and/or a location of the receiver may be further determined.

A ranging initiator is a device that initiates a ranging procedure.

A ranging responder is a device that responds to the ranging procedure initiated by the ranging initiator and participates in ranging.

A ranging transmitter is a device that sends a ranging signal, where the ranging signal may be a signal used for ranging.

A ranging receiver is a device that receives a ranging signal.

(3) Positioning means that a transmitter and a receiver transmit a signal to determine a location of the transmitter and/or a location of the receiver.

A positioning initiator is a device that initiates a positioning procedure.

A positioning responder is a device that responds to the positioning procedure initiated by the positioning initiator and participates in positioning.

A positioning transmitter is a device that sends a positioning signal, where the positioning signal may be a signal used for positioning.

A positioning receiver is a device that receives the positioning signal.

Measurement mentioned in embodiments of this application includes measurement processes such as ranging, sensing, positioning, and communication that are performed based on a UWB signal. Correspondingly, for example, when measurement is ranging, a corresponding measurement round is a ranging round. For another example, when measurement is sensing, a corresponding measurement round is a sensing round.

In addition, a "frame structure (frame structure)" in this application may also be referred to as a "frame format (frame format)" or the like. A name of the frame structure is not limited, provided that the frame structure can be used to represent a signal frame feature like a structure/format of a UWB signal frame.

Names of defined or used fields and information are not limited in embodiments of this application. The provided names of the fields and information are merely examples, for example, a recommended number of fragments (recommended number of fragments, RNF) request, a fragment number index (fragment number index, FNI), a measurement report (ranging measurement report, RMR), poll with 1-octet piggybacking information, poll with 2-octet piggybacking information, measurement report selection (ranging measurement report selections, RMRS), RNF report presence control (RNF report presence control, RNFRPC), and a report part indication. A modulation configuration used by an NB is not limited in this specification, and a 250 kbit/s offset quadrature phase shift keying (offset quadrature phase shift keying, O-QPSK) NB PHY is used as an example. This is merely shown as an example.

Locations of fields and information, numbers of octets of the fields and information, and numbers of bits of the fields and information are not specifically limited in embodiments of this application, and locations of fields and information, numbers of octets of the fields and information, numbers of bits of the fields and information, and the like in the following are merely shown as examples. In other words, sizes of various fields and information are not limited in embodiments of this application. Tables mentioned in this application are merely examples.

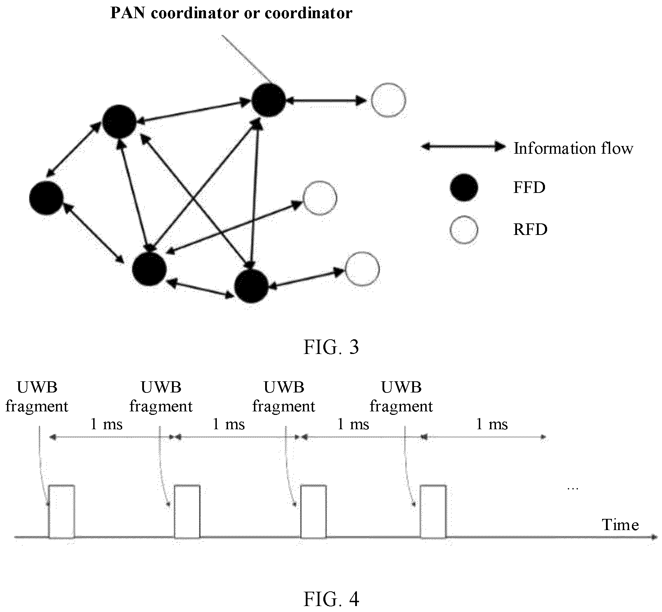

In addition, in embodiments of this application, a "fragment (fragment or segment) signal" may also be referred to as a "block signal", a "short signal", a "partial signal", a "fragment", a "block", a "slice", a "slice signal", or the like. A name of the fragment signal is not limited, provided that the fragment signal can be used to identify that a UWB signal is segmented into a plurality of UWB signals, a time length of each of the plurality of UWB signals obtained through segmentation is less than 1 millisecond, and one UWB signal obtained through segmentation is sent in each millisecond, as shown in FIG. 4. A UWB fragment signal is usually a signal that does not carry data content. For example, the UWB fragment signal may be a preamble-only (preamble-only) signal. Optionally, a plurality of fragment signals obtained by segmenting a UWB signal may be the same. For example, the plurality of fragment signals obtained by segmenting the UWB signal are preambles (preambles) with a same configuration. The preambles with the same configuration include but are not limited to a preamble length, a sequence used by the preamble, and the like. The preamble is a group of sequences, and may be used to identify a device identity when a device interacts with another device or accesses a network.

The modulation configuration used by the NB is not limited in embodiments of this application, and the provided 250 kbit/s offset quadrature phase shift keying (offset quadrature phase shift keying, O-QPSK) NB PHY is merely shown as an example. Another modulation configuration, for example, 500 kbit/s O-QPSK or 1 Mbit/s (1000 kbit/s) O-QPSK, may alternatively be used. 250 kbit/s represents a data rate, that is, represents 250 kbps, and kbps represents kilobits per second.

It should be noted that a type of a signal for carrying the defined or used field is not limited in embodiments of this application, and a provided NB signal is merely an example. In other words, the type of the signal for carrying the defined or used field may alternatively be another non-UWB signal, for example, a Bluetooth signal. For another example, for a non-narrowband-assisted MMS process, the type of the signal for carrying the defined or used field and/or a frame format may alternatively be a UWB signal.

Embodiments of this application are applicable to a WLAN scenario, for example, applicable to the Institute of Electrical and Electronics Engineers (Institute of Electrical and Electronics Engineers, IEEE) 802.11 system standard, for example, 802.11a/b/g, 802.11n, 802.11ac, 802.11ax, a next generation of 802.11ax, for example, an 802.11be standard, Wi-Fi 7, or extremely high throughput (extremely high throughput, EHT), 802.11ad, 802.11ay, 802.11bf, a next generation of 802.11be, for example, Wi-Fi 8, or a next-generation standard of Wi-Fi 8. Alternatively, embodiments of this application are applicable to a wireless local area network system, for example, an internet of things (internet of things, IoT) network or a vehicle-to-everything (Vehicle to X, V2X) network, for example, an 802.15.4ab standard and an 802.15.4z standard. Certainly, embodiments of this application is further applicable to another possible communication system, for example, an LTE system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G communication system, and a future 6G communication system.

The following uses an example in which embodiments of this application are applicable to a WLAN scenario. It should be understood that the WLAN starts from an 802.11a/g standard, and goes through 802.11n, 802.11ac, 802.11ax, and 802.11be that is currently being discussed. 802.11n may also be referred to as high throughput (high throughput, HT), 802.11ac may also be referred to as very high throughput (very high throughput, VHT), 802.11ax may also be referred to as high efficiency (high efficiency, HE) or Wi-Fi 6, 802.11be may also be referred to as EHT or Wi-Fi 7, and standards before HT, for example, 802.11a/b/g, may be collectively referred to as non-high throughput (Non-HT).

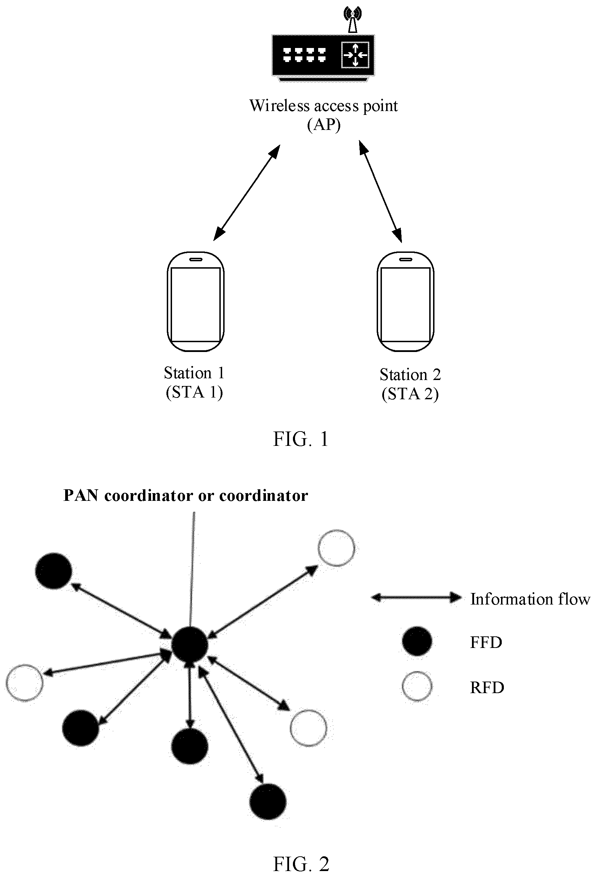

FIG. 1 is a diagram of a network architecture of a WLAN to which an embodiment of this application is applicable. In FIG. 1, an example in which the WLAN includes one wireless access point (access point, AP) and two stations (stations, STAs) is used. A STA associated with the AP can receive a radio frame sent by the AP, and can also send a radio frame to the AP. In addition, embodiments of this application are also applicable to communication between APs. For example, the APs may communicate with each other by using a distributed system (distributed system, DS). Embodiments of this application are also applicable to communication between STAs. It should be understood that numbers of APs and STAs in FIG. 1 are merely an example. There may be more or less APs and STAs.

The access point may be an access point through which a terminal device (for example, a mobile phone) accesses a wired (or wireless) network, and is mainly deployed at home, in a building, and in a campus, with a typical coverage radius ranging from tens of meters to over a hundred meters. Certainly, the access point may alternatively be deployed outdoors. The access point is equivalent to a bridge that connects the wired network and the wireless network. The access point is mainly used to connect various wireless network clients together and then connect the wireless network to an ethernet. Specifically, the access point may be a terminal device (for example, a mobile phone) or a network device (for example, a router) with a Wi-Fi chip. The access point may be a device that supports the 802.11be standard. Alternatively, the access point may be a device that supports a plurality of wireless local area network (wireless local area network, WLAN) standards of the 802.11 family such as 802.11ax, 802.11ac, 802.11ad, 802.11ay, 802.11n, 802.11g, 802.11b, 802.11a, and a next generation of 802.11be.

The station may be a wireless communication chip, a wireless sensor, a wireless communication terminal, or the like, and may also be referred to as a user. For example, the station may be a mobile phone that supports a Wi-Fi communication function, a tablet computer that supports a Wi-Fi communication function, a set-top box that supports a Wi-Fi communication function, a smart television set that supports a Wi-Fi communication function, a smart wearable device that supports a Wi-Fi communication function, a vehicle-mounted communication device that supports a Wi-Fi communication function, or a computer that supports a Wi-Fi communication function. Optionally, the station may support the 802.11be standard. Alternatively, the station may support a plurality of wireless local area network (wireless local area network, WLAN) standards of the 802.11 family such as 802.11ax, 802.11ac, 802.11n, 802.11g, 802.11b, 802.11a, and a next generation of 802.11be.

For example, the access point and the station may be devices used in an internet of vehicles, internet of things nodes or sensors in an internet of things (IoT, internet of things), smart cameras, smart remote controls, or smart water or electricity meters in a smart home, or sensors in a smart city.

The AP and the STA in embodiments of this application may be an AP and a STA that are applicable to the IEEE 802.11 system standard. The AP is an apparatus that is deployed in a wireless communication network and that provides a wireless communication function for a STA associated with the AP. The AP may be used as a center of the communication system, and is usually a network-side product that supports MAC and PHY in the 802.11 system standard, for example, may be a communication device such as a base station, a router, a gateway, a repeater, a communication server, a switch, or a bridge. The base station may include a macro base station, a micro base station, a relay station, or the like in various forms. Herein, for ease of description, the devices mentioned above are collectively referred to as an AP. The STA is usually a terminal product that supports media access control (media access control, MAC) and a physical layer (physical, PHY) of the 802.11 system standard, for example, a mobile phone or a notebook computer.

It may be understood that a first communication apparatus in embodiments of this application may be an AP or a STA. Similarly, a second communication apparatus in embodiments of this application may be an AP or a STA.

The technical solutions provided in embodiments of this application may operate in a star topology structure, a point-to-point topology structure, or a mesh topology structure. FIG. 2 is a diagram of a star topology according to an embodiment of this application. As shown in FIG. 2, in the star topology, a central node may control data communication between one or more other devices. The central node may be an AP or a STA, and the other device may be an AP or a STA.

It may be understood that a point-to-point topology may be considered as a special mesh topology. The point-to-point topology is a structure of data communication between two devices. As shown in FIG. 3, in a mesh topology structure, data communication may be performed between any two devices.

Optionally, in FIG. 2 or FIG. 3, a black node is a full-function device (full-function device, FFD), and a white node is a reduced-function device (reduced-function device, RFD). In an ultra-wideband (ultra wideband, UWB) technology system, an FFD may be an anchor device, or a tag device having a strong computing capability, for example, a UWB tag carried on a smartphone; and an RFD is a tag device, and has only a partial computing capability. In a possible implementation, the FFD device can serve as a personal area network (personal area network, PAN) coordinator or a coordinator, but the RFD cannot serve as the PAN coordinator or the coordinator.

An ultra-wideband (ultra wideband, UWB) technology is a wireless communication and sensing/ranging technology in which a nanosecond-level wireless non-sinusoidal narrow impulse is used for signal transmission. Therefore, the ultra-wideband technology occupies a wide spectrum range. Due to a narrow impulse and extremely low radiation spectral density of the ultra-wideband technology, a UWB system has advantages such as a strong multipath resolution capability, low power consumption, and high confidentiality, and has attracted wide attention in the industry.

In the UWB technology, a carrier in a conventional communication system does not need to be used, and data is transmitted by sending and receiving extremely narrow impulses at a nanosecond or smaller level. Therefore, a very high requirement is imposed on time synchronization between a receiving device and a sending device. In addition, due to a large communication bandwidth of the UWB technology, the devices have high power consumption and complexity when a signal is received and sent on an ultra-wideband channel, and most UWB devices are driven by a battery. It is expected to further reduce power consumption of the UWB system in a next-generation standard. Therefore, all signals other than ranging, sensing, and positioning reference signals are received and sent in a narrowband system in a narrowband signal-assisted manner. This reduces overall power consumption overheads.

Due to a large bandwidth of the UWB system, to reduce interference of the UWB system to another narrowband device during operation, the Federal Communications Commission (federal communications commission, FCC) imposes a strict limitation on power spectral density of a UWB signal. There are mainly two rules.

Rule 1: An average value of maximum power spectral density (power spectral density, PSD) of a transmitted UWB signal within one millisecond cannot be greater than 41.3 decibel milliwatts (decibel relative to one milliwatt, dBm) per megahertz.

Rule 2: Maximum power of the transmitted UWB signal in any 50 MHz bandwidth cannot exceed 1 milliwatt.

Rule 1 limits total emission energy of the UWB signal within 1 millisecond. For example, the total emission energy of the UWB signal within 1 millisecond in a 500 MHz bandwidth is 7 nanojoules (nJ). However, the energy of the UWB signal may be concentrated and transmitted in a shorter time. This increases instantaneous power of a transmitted signal, enlarges coverage of the transmitted signal, and increases a signal-to-noise ratio of a received signal. Based on this, in a scenario in which transmit power needs to be increased, a transmitter segments a to-be-transmitted UWB signal into a plurality of fragments, where a time length of each fragment of signal is less than 1 millisecond, and then sends only one fragment in each millisecond, as shown in FIG. 4.

Fragment transmission can increase the instantaneous power of the UWB signal, but cannot increase the instantaneous power infinitely. Rule 2 actually limits a power increase multiple for UWB-based fragment transmission. Fragment transmission is also referred to as multi-millisecond (multi-millisecond, MMS) transmission.

In addition, due to a large bandwidth of a UWB system, a UWB communication device needs to have an ultra-high-speed data receiving and sending capability, while spectral efficiency of an impulse radio ultra-wideband (impulse radio ultra-wideband, IR-UWB) system based on impulse transmission is low. Therefore, when same information is transmitted, the IR-UWB system requires much higher power consumption overheads than another narrowband (narrowband, NB) short-range protocol like Bluetooth or Zigbee (Zigbee).

However, in ranging, sensing, and positioning scenarios, measurement or sensing precision is greatly related to a signal bandwidth. A larger signal bandwidth indicates higher sensing or ranging precision. Therefore, it may be considered that ranging, sensing, and positioning reference signals are sent and received by using the UWB system, and all other data is transmitted according to an NB protocol. This can ensure ranging, sensing, and positioning precision, and can reduce power consumption. The foregoing transmission mode is also referred to as a narrowband assisted (narrow-band assisted, NBA) multi-millisecond (multi-millisecond, MMS) UWB.

A single measurement process such as ranging, sensing, or positioning is defined as a measurement round (measurement round). A minimum processing time unit of each measurement round is a measurement slot (measurement slot). One measurement round is divided into three phases: a measurement control phase (measurement control phase), a measurement phase (measurement phase), and a measurement report phase (measurement report phase).

A sensing scenario is used as an example for description. The foregoing measurement round may be a sensing round (sensing round). A minimum processing time unit of each sensing round is a sensing slot (sensing slot). One sensing round is divided into three phases: a sensing control phase (sensing control phase), a measurement phase (sensing measurement phase), and a measurement report phase (sensing measurement report phase).

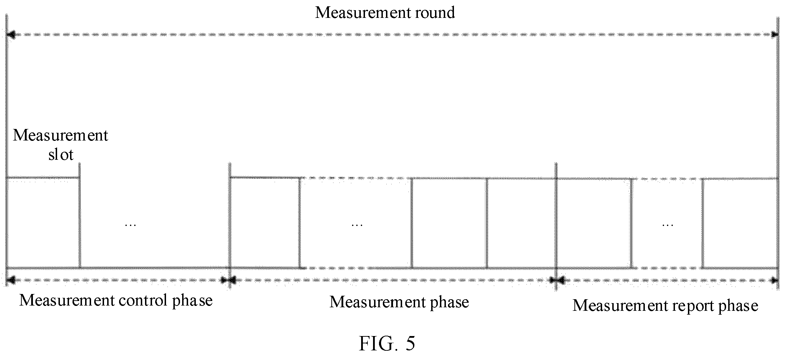

In a ranging scenario defined in the IEEE 802.15.4z standard, the measurement round may be a ranging round. A minimum processing time unit of each ranging round is a ranging slot (ranging slot). One ranging round is divided into three phases: a ranging control phase (ranging control phase), a ranging phase (ranging measurement phase), and a ranging report phase (ranging measurement report phase), as shown in FIG. 5. In IEEE 802.15.4z, the ranging control phase includes one ranging slot. However, in the IEEE 802.15.4ab standard that is currently under discussion and formulation, the ranging control phase may include more than one ranging slot.

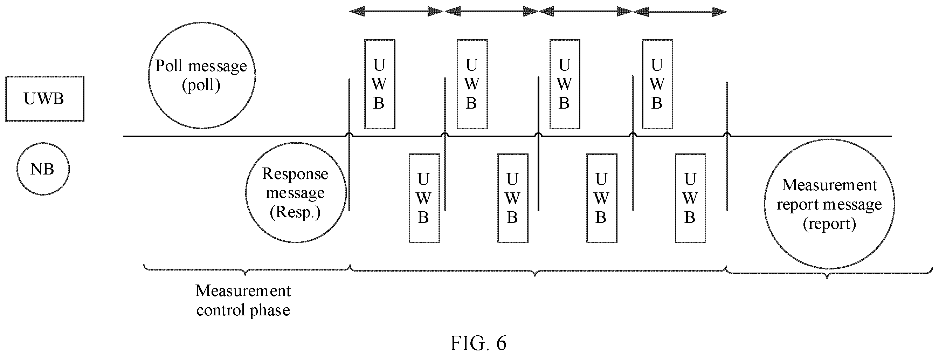

In a measurement control phase of an NBA-MMS UWB measurement round, a measurement initiator usually needs to send a poll (poll) message to a measurement responder. For example, in a ranging round, a ranging initiator sends a poll message to a ranging responder. After correctly receiving the poll message, the measurement responder needs to feed back a response message (response, Resp.) to the measurement initiator. After the measurement initiator correctly receives the response message, the measurement initiator and the measurement responder exchange UWB signals to perform an NBA-MMS UWB measurement process. After the measurement process ends, the measurement responder or the measurement initiator may obtain a measurement result of the UWB signal. The measurement responder may send a measurement report (report) message to the measurement initiator, or the measurement initiator sends a measurement report message to the measurement responder, as shown in FIG. 6. The measurement report message may include the measurement result, and is usually carried by an NB signal.

Currently, the measurement report message sent by the measurement responder or the measurement initiator may include all types of measurement results obtained through measurement. In other words, in the current measurement report phase, all the types of measurement results obtained through measurement by the measurement responder or the measurement initiator need to be placed in one measurement report message, and reported via the NB signal. However, in a transmission method of the measurement report message, NB consumption is increased, and energy consumption of receiving and processing of the measurement initiator or a measurement responder is increased.

In view of this, an embodiment of this application provides an information transmission method. In the method, when sending a measurement report message to a first communication apparatus, a second communication apparatus may indicate a type of a measurement result in the measurement report message to the first communication apparatus. In this way, different types of measurement results can be respectively transmitted via different measurement report messages. This reduces NB consumption, meets a duty cycle requirement of an NB signal, and reduces energy consumption of receiving and processing of the first communication apparatus.

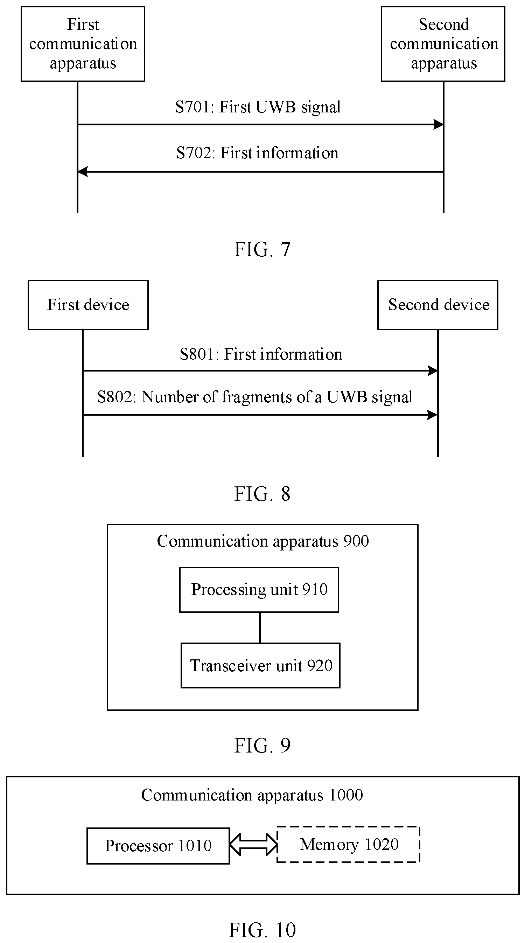

FIG. 7 is an example flowchart of an information transmission method according to this application. The method may include the following operations. In the embodiment shown in FIG. 7, a first communication apparatus may be a measurement initiator, for example, a ranging initiator, a sensing initiator, or a positioning initiator, or a first communication apparatus may be a measurement responder, for example, a ranging responder, a sensing responder, or a positioning responder. Similarly, a second communication apparatus may be a measurement responder. It may be understood that, when the first communication apparatus is the measurement initiator, the second communication apparatus may be the measurement responder, or when the first communication apparatus is the measurement responder, the second communication apparatus may be the measurement initiator. This is not limited in embodiments of this application. By default, the following uses an example in which the first communication apparatus is the measurement initiator and the second communication apparatus is the measurement responder for description.

S701: The first communication apparatus sends a first UWB signal to the second communication apparatus.

Correspondingly, the second communication apparatus receives the first UWB signal from the first communication apparatus.

The first UWB signal may be used for one or more of ranging, positioning, or sensing. Optionally, the first UWB signal may be one or more fragments in the segmented UWB signal shown in FIG. 6, or the first UWB signal may be a non-segmented UWB signal. This is not specifically limited in this application.

Optionally, the second communication apparatus may measure the first UWB signal to obtain a measurement result of the first UWB signal.

S702: The second communication apparatus sends first information to the first communication apparatus.

Correspondingly, the first communication apparatus receives the first information from the second communication apparatus.

The first information may include second information and the measurement result. The second information may indicate a type of the measurement result. For example, the first information may be a measurement report message sent in a measurement report phase, and the measurement report message may include the measurement result and the second information. A sending phase of the measurement report message is not limited in embodiments of this application, and sending the measurement report message in the measurement report phase is merely an example. The second information may indicate the type of the measurement result in the measurement report message.

In a possible implementation, the second information may be a newly added field in the first information, or an existing field in the first information may be reused as the second information. For example, the first information may be a compressed physical layer service data unit (physical layer service data unit, PSDU). The following describes a frame format of the compressed PSDU in Table 1.

**Table 1: Example of the frame format of the compressed PSDU**

| | | | |
|---|---|---|---|
| Octet (octets): 1 | 2 | Variable value (variable) | 2 |
| Message identification (message ID) | Address (address) | Content (content) | Cyclic redundancy check (CRC) |

Meanings of the various fields in Table 1 are shown below:
The message ID field, namely, a message identification field, indicates a type of a message corresponding to the compressed PSDU. Message content corresponding to the message ID field is used to determine a type and a size of data content carried in the content field in the frame format of the compressed PSDU.

The address field indicates a device address, for example, an address of a device that receives the compressed PSDU.

The content field indicates the data content carried in the compressed PSDU. A size of the field is a variable value (variable), and is determined based on the message content corresponding to the message ID field.

The cyclic redundancy check (cyclic redundancy check, CRC) field is a field used to perform error check and correction on the compressed PSDU.

In this embodiment of this application, one or more of the message identification field, the address field, the content field, and the CRC field may be reused as the second information. For another example, the second information may be a newly added field in the compressed PSDU shown in Table 1. For example, the second information may be a newly added field before the message identification field, a newly added field after the message identification field and before the address field, a newly added field after the address field and before the content field, a newly added field after the content field and before the CRC field, or a newly added field after the CRC field. It may be understood that a location of the newly added field is not limited in embodiments of this application. The following uses Table 2 as an example to illustrate that the second information is the newly added field in the compressed PSDU shown in Table 1.

**Table 2: Example of the frame format of the compressed PSDU**

| | | | | |
|---|---|---|---|---|
| Octet (octets): 1 | 2 | 1 | Variable value (variable) | 2 |
| Message identification (message ID) | Address (address) | Report control (report control) | Content (content) | CRC |

As shown in Table 2, the second information may be the report control field in Table 2. Table 2 is merely shown as the example of the frame format of the compressed PSDU, and does not constitute a limitation on the frame format of the PSDU.

In a possible case, the content field in the compressed PSDU may carry the measurement result, and the content field may also be referred to as a measurement report (ranging measurement report, RMR) field. That is, the measurement report field may carry the measurement result. In this case, the report control field may indicate the type of the measurement result carried in the measurement report field, as shown in Table 3.

**Table 3: Example of the frame format of the compressed PSDU**

| | | | | |
|---|---|---|---|---|
| Octet (octets): 1 | 2 | 1 | 4 | 2 |
| Message identification (message ID) | Address (address) | Report control (report control) | Measurement report (RMR) | CRC |

It may be understood that the measurement report field in Table 3 is merely shown as an example of a field carrying the measurement result, and does not constitute a limitation on a name of the field carrying the measurement result. In the frame format of the compressed PSDU shown in Table 3, the second communication apparatus may send the measurement result to the first communication apparatus, and the type of the measurement result is indicated by the report control field. Table 3 is merely shown as the example of the frame format of the compressed PSDU, and does not constitute a limitation on the frame format of the PSDU.

Optionally, the report control field in Table 3 may carry RMRS information. The RMRS information may indicate the type of the measurement result. It may be understood that the RMRS information is merely an example of information indicating the type of the measurement result, and does not constitute a limitation on a name of the information indicating the type of the measurement result. A person skilled in the art may alternatively name the information with another name.

In a possible case, the type of the measurement report in this specification may include one or more of a time of flight (time of flight, TOF), a reply time (reply time, RT), a round trip time (round trip time, RTT), a gap of reply time correction (gap of reply time correction, GRTC), and the like. It may be understood that the type of the measurement report may further include another type, for example, an angle of arrival (angle of arrival, AOA), a time of arrival (Time of Arrival, TOA), a time difference of arrival (time difference of arrival, TDOA), or timestamp (timestamp) information. This is not specifically limited in this application. In the foregoing types, the RT and the RTT may be values required for completing a UWB ranging application. Any value that can substantially reflect content of the RT and the RTT falls within the protection scope of this application. This is not limited in embodiments of this application. The GRTC may be used for time synchronization calibration between the first communication apparatus and the second communication apparatus. Any value that can substantially reflect content of the GRTC falls within the protection scope of this application. This is not limited in embodiments of this application. Any value that can substantially reflect content of the TOF falls within the protection scope of this application. This is not limited in embodiments of this application. Names of fields such as the TOF, the RT, the RTT, and the GRTC are not limited in embodiments of this application.

The following describes a correspondence between the RMRS information and the type of the measurement report in Table 4.

**Table 4: Example of the correspondence between the RMRS information and the type of the measurement report**

| RMRS | Corresponding meaning |
|---|---|
| 0 | The type of the measurement result is the TOF |
| 1 | The type of the measurement result is the RT |
| 2 | The type of the measurement result is the RTT |
| 3 | The type of the measurement result is the GRTC |
| ... | ... |

In Table 4, when a value of the RMRS is 0, it may be considered that the type of the measurement result is the TOF, that is, the type of the measurement result carried in the RMR is the TOF. When a value of the RMRS is 1, it may be considered that the type of the measurement result is the RT, that is, the type of the measurement result carried in the RMR is the RT. The rest may be deduced by analogy.

It should be noted that the correspondence between the RMRS information and the type of the measurement report shown in Table 4 is merely shown as an example, and does not constitute a limitation on a correspondence between the RMRS information and the type of the measurement report. The correspondence between the RMRS information and the type of the measurement report may be predefined in a protocol, may be indicated by the first communication apparatus to the second communication apparatus, may be indicated by the second communication apparatus to the first communication apparatus, or may be preconfigured. This is not specifically limited in this application. In addition, one or more correspondences in Table 4 fall within the protection scope of this application. For example, the value of the RMRS may alternatively include only a case in which the value of the RMRS is 0, 1, or 2 in Table 4. For another example, there may alternatively be another correspondence that is between the RMRS information and the type of the measurement report and that is formed by combining the one or more correspondences in Table 4 with one or more correspondences not provided in Table 4. This is not specifically limited in this application.

In Table 1 to Table 4, an example in which the first information is the PSDU is used for description. In another possible implementation, the first information may be a protocol data unit (physical layer protocol data unit, PPDU). The second information may be a newly added field in the PPDU, or an existing field in the PPDU may be reused as the second information. This is not limited in this application. The following describes a frame format of the PPDU in Table 5.

**Table 5: Example of the frame format of the PPDU**

| | | |
|---|---|---|
| Synchronization header (SHR) | Physical layer header (PHR) | Compressed PSDU |

Meanings of the various fields in Table 5 are shown below:
The synchronization header (synchronization header, SHR) field may be shown in an 802.15.4 standard.

A format of the physical layer header (physical layer header, PHR) is shown in Table 6. The PHR field is shown in the 802.15.4 standard.

The compressed PSDU field is a field carrying an NB message in a compressed frame format, and is used to configure and control an NBA-MMS UWB process. The compressed PSDU field is shown in Table 1.

**Table 6: Example of the frame format of the PHR**

| Bit (bits): 0 to 5 | 6 and 7 |
|---|---|
| Frame length (frame length) | Reserved (reserved) |

In Table 6, the frame length field indicates a number of octets (octet/byte) occupied by the compressed PSDU field. The reserved field indicates a field that is reserved and that is not defined.

The SHR field or the PHR field may be reused as the second information in this specification. Alternatively, any one or more fields in the SHR field may be reused as the second information in this specification. Alternatively, any one or more fields, for example, either the frame length field or the reserved field, in the PHR field may be reused as the second information in this specification.

For another example, the second information may be a newly added field in the PPDU shown in Table 5. For example, the second information may be a newly added field before the SHR field, a newly added field after the SHR field and before the PHR field, a newly added field after the PHR field and before the compressed PSDU field, or a newly added field after the PSDU field. For another example, the second information may be a newly added field in the SHR field, a newly added field in the PHR field, or a newly added field in the compressed PSDU. It may be understood that a location of the newly added field is not limited in embodiments of this application. For an implementation in which the second information is newly added to the compressed PSDU, refer to the implementation of Table 2 to Table 4.

Based on the foregoing solution, the type of the measurement result may be indicated to the first communication apparatus based on the second information, so that different types of measurement results can be sent via different measurement report messages. This can meet a duty cycle requirement of an NB signal, reduce NB signal consumption, and reduce energy consumption of receiving and processing of the first communication apparatus.

In a possible implementation, the first information may include first indication information. The first indication information may indicate that the first information includes the second information. In a possible case, the first indication information may be 1-bit information. When a value of the first indication information is 0, it may indicate that the first information does not include the second information, or when a value of the first indication information is 1, it may indicate that the first information includes the second information. On the contrary, when a value of the first indication information is 1, it may indicate that the first information does not include the second information, or when a value of the first indication information is 0, it may indicate that the first information includes the second information.

In another possible implementation, the first indication information may include the frame length field shown in Table 6 and the message identification field shown in Table 1 to Table 3. In other words, in this specification, whether the first information includes the second information may be indicated by the frame length field and the message identification field. For example, when a value of the frame length field is a first value, and a value of the message identification field is a second value, it may indicate that the first information, for example, the PPDU, includes the second information. For another example, when a value of the frame length field is a third value, and a value of the message identification field is a fourth value, it may indicate that the first information, for example, the PPDU, does not include the second information. It may be understood that the first value is different from the third value and/or the second value is different from the fourth value. The following provides descriptions in FIG. 7.

**Table 7: Example of the first information**

| Frame length (frame length) | Message identification (message ID) | Content of the first information |
|---|---|---|
| A | C | The first information includes the second information |
| B | D | The first information does not include the second information |

In Table 7, A and B may be the same or different, and C and D may be the same or different. For example, it is assumed that A is 10, B is 9, and both C and D are 0x02. In other words, when the frame length field is 10, and the message identification field is 0x02, the first information may include the second information. When the frame length field is 9, and the message identification field is 0x02, the first information does not include the second information. For another example, it is assumed that A is 10, B is 9, C is 0x02, and D is 0x04. In other words, when the frame length field is 10, and the message identification field is 0x02, the first information may include the second information. When the frame length field is 9, and the message identification field is 0x04, the first information does not include the second information.

It may be understood that the foregoing specific values of the frame length and the message identification are merely examples, and the specific values of the frame length and the message identification shown in Table 7 are not limited in this application.

It may be understood that the value of the frame length field and the content of the message identification field are merely shown as examples. This is not specifically limited in this application. In this specification, a correspondence between the content of the first information and both the value of the frame length field and the value of the message identification field may be preset, may be predefined in a protocol, may be indicated by the first communication apparatus to the second communication apparatus, or may be indicated by the second communication apparatus to the first communication apparatus. This is not specifically limited in this application.

Based on the foregoing solution, whether the first information includes the second information is indicated to the first communication apparatus, so that the first communication apparatus can determine whether the measurement result is transmitted via different measurement report messages, to determine whether there is subsequent measurement report message transmission. This improves flexibility of the first communication apparatus. In addition, whether the first information includes the second information is indicated by the frame length field and the message identification field. This can reduce NB signal consumption, and can meet a duty cycle requirement of an NB signal.

Optionally, the measurement result in this specification may be segmented, and then measurement results obtained through segmentation are separately sent to the first communication apparatus. In a possible case, the first information may carry an i^{th} subpart obtained by segmenting the measurement result into a plurality of subparts, where i is a positive integer. In another possible case, a measurement result carried in the first information may be a non-segmented measurement result. For example, the first information may include a first field, and the first field may indicate that the measurement result is not segmented. For another example, the first information may include a second field, and the second field may indicate that the first information carries the i^{th} subpart of the measurement result.

The first field may be a newly added field in the first information, or an existing field in the first information may be reused. Similarly, the second field may be a newly added field in the first information, or an existing field in the first information may be reused. It should be noted that for the first field and the second field, refer to the implementation of the foregoing second information. Details are not described herein again.

Optionally, the first field or the second field may alternatively be newly added to the second information. For example, a report part indication (report part indication) may indicate that the measurement result carried in the first information is not segmented, or may indicate that the first information carries the i^{th} subpart of the measurement result. In this way, the first information may carry the non-segmented measurement result, or may carry the i^{th} subpart of the measurement result. The following describes, in Table 8, a correspondence between the report part indication and the measurement result carried in the first information. It may be understood that in Table 8, descriptions are provided by using an example in which the report part indication may indicate that the measurement result carried in the first information is not segmented, or may indicate that the first information carries the i^{th} subpart of the measurement result. A person skilled in the art may further indicate, in another field, that the measurement result carried in the first information is not segmented, or that the first information carries the i^{th} subpart of the measurement result. This is not specifically limited in this application.

**Table 8: Example of the correspondence between the report part indication and the measurement result carried in first information**

| Report part indication | Meaning |
|---|---|
| 0 | Non-segmented measurement result (non-segmented transmission for ranging measurement report) |
| 1 | 1^{st} segmented subpart of the measurement result (transmission for part 1 for ranging measurement report) |
| 2 | 2^{nd} segmented subpart of the measurement result (transmission for part 2 for ranging measurement report) |
| 3 | Reserved (reserved) |

As shown in Table 8, when a value of the report part indication is 0, it may indicate that the measurement result carried in the first information is not segmented. When a value of the report part indication is 1, it may indicate that the first information carries the 1^{st} subpart of the measurement result. The rest may be deduced by analogy.

It may be understood that, in Table 8, an example in which the measurement result is segmented into two parts is used for description. A person skilled in the art may segment the measurement result into three parts, four parts, or more parts based on a duty cycle requirement of an NB. This is not specifically limited in this application. The correspondence between the report part indication and the measurement result carried in the first information may be indicated by the first communication apparatus to the second communication apparatus, may be indicated by the second communication apparatus to the first communication apparatus, may be predetermined in a protocol, or may be preconfigured.

Based on the foregoing solution, the measurement result may be segmented, and the subparts obtained through segmentation are carried in different measurement report messages. This can meet a duty cycle requirement of an NB signal, and can reduce NB signal consumption.

Optionally, the report part indication may alternatively be implemented in an RMRS field. This is not specifically limited in this application.

In a possible implementation, in the information transmission method provided in this embodiment of this application, the second communication apparatus may further send third information to the first communication apparatus. The third information may indicate a number of fragments of a second UWB signal. The second UWB signal may be used for one or more of ranging, positioning, or sensing. A sending time of the second UWB signal may be later than a sending time of the first UWB signal. For example, the second UWB signal is a signal to be sent in a next measurement round. Based on this solution, the second communication apparatus sends the number of fragments of the second UWB signal to the first communication apparatus, so that a number of fragments of a UWB signal can be updated in time, to improve sensing or measurement accuracy. In addition, the measurement report message carries the number of fragments of the second UWB signal. This can reduce consumption of air interface resources, and can reduce additional interference to NB signal receiving of another device.

In an example, the third information may be a newly added field in the first information. For example, a field may be newly added to the PPDU or the compressed PSDU, to indicate the number of fragments of the second UWB signal. In another example, an existing field in the first information may alternatively be reused as the third information. For example, the message identification field may be reused. For the third information, refer to the implementation of the second information, the first field, or the second field. Details are not described herein again.

In a possible case, the third information may be newly added to the second information. For example, a field may be newly added to the report control field, to indicate the number of fragments of the second UWB signal. The following describes, in Table 9, an implementation in which the third information is newly added to the second information.

**Table 9: Example of a frame format of the report control field**

| Bit (bits): to be determined (to be determined, TBD) | 6 and 7 |
|---|---|
| RNF | RMRS |

In Table 9, the RNF field may indicate the number of fragments of the second UWB signal. The RMRS field may indicate the type of the measurement report carried in the first information, and/or the RMRS field may indicate that the measurement report carried in the first information is not segmented, or indicate that the first information carries the i^{th} subpart of the measurement report. For related descriptions of the RMRS, refer to the second information, the first field, and the second field. Details are not described herein again.

In a possible case, the third information or the RNF may be implemented in a direct indication manner. In another possible case, the third information or the RNF may be implemented in an indirect manner. The following separately provides descriptions by using an example 1 and an example 2.

Example 1: The RNF is implemented in the direct indication manner.

For example, if the RNF field may carry an FNI, a feasible form of Table 9 is shown in Table 10 below.

**Table 10: Example of a frame format of a report control field**

| Bit (bits): 0 | 1 to 3 | 4 and 5 | 6 and 7 |
|---|---|---|---|
| FNI value (valid) | FNI | Reserved (reserved) | RMRS |

As shown in Table 10, the FNI value field indicates whether the FNI field takes effect. For example, when the FNI value is 0, the FNI field does not take effect, or when the FNI value is 1, the FNI field takes effect. On the contrary, when the FNI value is 1, the FNI field does not take effect, or when the FNI value is 0, the FNI field takes effect. It should be noted that the value and the meaning of the FNI value field are not limited in this specification.

The FNI field in Table 10 may indicate the number of fragments of the second UWB signal sent by the second communication apparatus to the first communication apparatus. For example, the FNI field in Table 10 may indicate an index of the number of fragments of the second UWB signal, and the index may be mapped to a value of the number of fragments. For example, a mapping relationship is shown in Table 11.

**Table 11: Example of the mapping relationship between the FNI and the number of fragments**

| FNI | 0 | 1 | 2 | 3 | 4 | 5 | 6 | 7 |
|---|---|---|---|---|---|---|---|---|
| Meaning | Zero fragments | One fragment | Two fragments | Four fragments | Eight fragments | 16 fragments | 32 fragments | Halving the number of fragments |

It should be noted that the number of fragments that can be indicated by the FNI field is not limited in this specification. A size of the FNI field is not limited in this specification. Table 11 is merely the example of the mapping relationship between the FNI and the number of fragments.

It may be understood that, when the number of fragments indicated by the FNI is 0, for example, as shown in Table 11, it may indicate that the second communication apparatus recommends, to the first communication apparatus, an action of stopping NBA-MMS ranging in the following ranging round, which is briefly referred to as a recommended termination action below.

It may be understood that, when the meaning indicated by the FNI is halving the number of fragments, for example, as shown in Table 11, it indicates that the second communication apparatus recommends, to the first communication apparatus, an action of reducing a number of MMS fragments required for performing NBA-MMS ranging in the following ranging round to a half of a number of MMS fragments in a current NBA-MMS ranging round, which is briefly referred to as a recommended halving action below.

It should be noted that, a case in which the FNI is not the recommended termination action or recommended halving action is briefly referred to as common reporting below.

Example 2: The RNF is implemented in the indirect indication manner.

For example, if the RNF is implemented based on a link margin report (link margin report, LMR), a feasible form of Table 10 is shown in Table 12 below.

**Table 12: Example of a frame format of a report control field**

| | |
|---|---|
| Bit (bits): 0 to 5 | 6 and 7 |
| LMR | RMRS |

A value of the LMR field in Table 12 may be used to implement the RNF, that is, may indicate the number of fragments of the second UWB signal. For example, when LMR=000000, it indicates that a current LMR value does not take effect, to be specific, the second communication apparatus does not return the LMR report that can reflect RNF information. For another example, when LMR=000001, it indicates that the second communication apparatus sends the recommended termination action to the first communication apparatus. In other words, an RNF value recommended by the second communication apparatus to the first communication apparatus is 0. For another example, when LMR=111111, it indicates that the second communication apparatus sends the recommended halving action to the first communication apparatus. For another example, when the LMR is another value, the LMR reports specific link budget information, that is, common reporting. The value of the LMR field and the recommended action corresponding to the value are not limited in embodiments of this application.

Based on the foregoing solution, the second communication apparatus updates and adjusts an inappropriate number of fragments of a UWB signal to an appropriate number of fragments of the UWB signal in a timely manner based on actual measurement effect of a current measurement round, and indicates the number of fragments of the UWB signal to the first communication apparatus based on the third information. This avoids a waste of an excessive time in subsequent consecutive measurement processes, thereby improving system efficiency. It should be noted that an adjustment basis for updating the number of UWB fragments is not limited in embodiments of this application. For example, a feasible manner is as follows: In the current measurement round, the second device determines, based on a receiving status of the UWB fragment signal, whether to perform updating and adjustment and update an adjusted number of UWB fragments.

It should be noted that RNFRPC and/or the RNF are/is not limited in this specification, and the provided FNI and LMR are merely shown as examples. A person skilled in the art may further indicate the number of fragments of the second UWB signal based on another field.

In addition, content recommended by the FNI and/or the RNF is not limited in this specification, and may be one or more of the following three cases: the recommended termination action, the recommended halving action, and common reporting. In other words, the content may be a case in which the recommended termination action and the recommended halving action are included in the foregoing example 1 and example 2, or may be a case in which only the recommended termination action or the recommended halving action is included. For example, the content may alternatively be a case in which neither the recommended termination action nor the recommended halving action is included, that is, only common reporting is included.

Optionally, the first information in this specification may include control information, and the control information may indicate whether the first information includes the third information. For example, the control information may be implemented based on 1-bit information. When a value of the control information is 1, it may indicate that the first information includes the third information, or when a value of the control information is 0, it may indicate that the first information does not include the third information. On the contrary, when a value of the control information is 0, it may indicate that the first information includes the third information, or when a value of the control information is 1, it may indicate that the first information does not include the third information.

In an example, the control information may be a newly added field in the first information. For example, a field may be newly added to the PPDU or the compressed PSDU, to indicate whether the first information includes the third information. In another example, an existing field in the first information may alternatively be reused as the third information. For example, the message identification field may be reused. For the third information, refer to the implementation of the second information, the first field, or the second field. Details are not described herein again.

In a possible case, the control information may be newly added to the second information. For example, a field may be newly added to the report control field, to indicate whether the first information includes the third information. The following describes, in Table 13, an implementation in which the third information is newly added to the second information.

**Table 13: Example of a frame format of the report control field**

| | | |
|---|---|---|
| Bit (bits): TBD | TBD | 6 and 7 |
| RNF report presence control (RNF report presence control, RNFRPC) | RNF | RMRS |

In Table 13, the RNFRPC field indicates whether reporting of the RNF is activated in the report control field. A specific form and a size of the RNFRPC field are not limited in this specification. A location of the RNFRPC field in the report control field is not limited in this specification.

Optionally, the RNFRPC field may alternatively be represented in an indirect indication manner. For example, when the RNF is represented by the LMR, the RNFRPC may be represented by a value of the LMR. In an example, based on the description of the LMR in Table 12, when LMR=000000, it indicates that the current LMR value (the RNF value) does not take effect, or when the LMR is another value (not 000000), it indicates that the current LMR value (the RNF value) takes effect. Details are not described herein again.

The RNF field in Table 13 indicates the recommended number of fragments reported by the second communication apparatus, and indicates the number of fragments of the second UWB signal. Refer to the implementation of the foregoing third information. A specific form and a size of the RNF field are not limited in this specification. A location of the RNF field in the report control field is not limited in this specification.

Optionally, the third information may alternatively be implemented in combination with the RNF in this specification. The following describes, in Table 14, an example of a possible combination of Table 8 and Table 13.

**Table 14: Example of a frame format of the report control field**

| | | |
|---|---|---|
| Bit (bits): TBD | TBD | 6 and 7 |
| RNF report presence control (RNF report presence control, RNFRPC) | RNF | Report part indication |

For the RNFRPC and the RNF field in Table 14, refer to the implementation of Table 13. Details are not described herein again. For the report part indication in Table 14, refer to the implementation of Table 8. Details are not described herein again.

Optionally, whether the first information includes the third information may alternatively be indicated by the message identification field and the frame length field in this specification. For example, in this specification, different message meanings are indicated through a combination of the frame length field in the PHR and the message identification field in the compressed PSDU, to reduce NB resource consumption and reduce a reporting delay. For a manner of indicating the different message meanings by the message identification field and the frame length field, refer to the implementation in which whether the first information includes the second information is indicated by the message identification field and the frame length field. Details are not described herein again.

For example, the message identification field is 0x02. Extended functions including different purposes are configured based on different values of the frame length field, as shown in Table 15 below.

**Table 15: Example of a frame format of the first information**

| Frame length (unit: octet) | Message identification | Message meaning and content | Duty cycle (a 250 kbit/s offset quadrature phase shift keying O-QPSK NB PHY is used) |
|---|---|---|---|
| 9 | 0x02 | Measurement report message | 48% |
| 10 | | Measurement report message+extended function message | 51.2% |

It can be seen from Table 15 that, when the frame length field=9, the message identification field 0x02 indicates that the compressed PSDU includes only the measurement report message. When the frame length field=10, the message identification field 0x02 indicates that the compressed PSDU includes the measurement report message that carries a 1-octet extended function message, for example, the third information. That is, a total length of the compressed PSDU is 10 octets in this case. It should be noted that, in the message identification field 0x02, when the frame length field=9 and the frame length field=10, types of measurement report messages that can be carried may be the same or may be different. This is not limited in the present invention.

It can be seen from Table 15 that, in a manner in which the frame length field and the message identification field carry the extended function message, for example, carry the RNF, the duty cycle still meets a duty cycle requirement of the NB.

Currently, values included in the message identification field and corresponding message types are 0x00-Poll, 0x01-Response, and 0x02-Report. These types of messages can be used to control a basic NBA-MMS UWB application. However, a total number of control messages required by UWB applications may be greater than 256. As a result, a 1-octet message identification field in an existing frame format is insufficient. In other words, if messages of different applications are carried by simply increasing a value state of the message identification field, the value state of the message identification field is consumed fast. In addition, even if a size of the message identification field is simply increased, for example, a length of the message identification field is increased from 1 octet to 2 octets, air interface consumption of the NB signal increases.

Therefore, the technical solution in which whether the first information carries the extended function message is indicated through a combination of the message identification field and the frame length field can reduce consumption of the value state of the message identification field, and reduce air interface consumption.

It may be understood that values of the message identification field and the frame length field that carry the extended function message are not limited in this specification, and the provided message identification field 0x02 is merely shown as an example. A person skilled in the art may carry the RNF field in another manner, and a person skilled in the art may carry an RNF function in a message corresponding to another message identification field. For example, the RNF function may be carried in a message corresponding to a message identification field 0x01-Response, or may be carried in a message corresponding to another message identification field value. This is not limited in this application.

In the foregoing implementation, an example in which the first communication apparatus is the measurement initiator and the second communication apparatus is the measurement responder is used for description. In the foregoing solution, it is assumed by default that a controller device is the first communication apparatus for description. It may be understood that the controller may alternatively be the measurement responder or a third-party device. The method provided in this embodiment of this application is applicable to the case in which the controller is the measurement responder or the third-party device. Details are not described again.

An embodiment of this application further provides another information transmission method. Information and fields are resorted below, and information with same ranking as the foregoing information may be different from the foregoing information. For example, the following first information and the first information in the embodiment shown in FIG. 7 may be different information. Currently, in a measurement report phase of each NBA-MMS UWB ranging round, a ranging responder updates and adjusts an inappropriate number of UWB fragments to an appropriate number of UWB fragments in a timely manner based on actual measurement effect of a current ranging round. This avoids a waste of an excessive time in subsequent consecutive ranging processes, thereby improving system efficiency.

Specifically, a process of updating the number of UWB fragments is triggered by sending, by the ranging responder, a feedback message including a request message to a ranging initiator. The request message is sent to the ranging initiator along with a measurement report. The measurement report includes recommended number of fragments (recommended number of fragments, RNF) information, to provide a reference for the ranging initiator to update the number of UWB fragments. After receiving the request message and the RNF information, the ranging initiator determines whether to perform a UWB measurement process based on the number of UWB fragments, and determines whether to perform a UWB ranging process based on an updated number of UWB fragments. The request message and the measurement report including an RNF information are usually carried by an NB signal.

However, in the foregoing solution, the ranging responder sends the request message to the ranging initiator to trigger the process of updating the number of UWB fragments. As a result, that the ranging responder sends the feedback message for the request message to the ranging initiator is not controlled by the ranging initiator. In other words, an RNF information sending process that is not controlled by the ranging initiator may cause additional NB consumption, resulting in unnecessary NB receiving and processing processes of the ranging initiator, and increasing energy consumption of receiving and processing of the ranging initiator. In addition, this process also consumes air interface transmission time resources, and affects subsequent measurement of the UWB ranging round. In addition, an additional NB feedback message introduced in this process may also cause additional interference of the NB signal to NB signal receiving of the another device.

In view of this, an embodiment of this application provides an information transmission method. In the method, a first communication apparatus may send first information to a second communication apparatus. The first information may be used to trigger ranging, positioning, or sensing. The first information may include second information, and the second information may be used to request a number of fragments of a UWB signal. The second communication apparatus may send the number of fragments of the UWB signal to the first communication apparatus. Based on this solution, the first communication apparatus requests the number of fragments of the UWB signal from the second communication apparatus. Therefore, a feedback message sent by the second communication apparatus is controlled by the first communication apparatus. This can reduce interference caused by this process to NB signal receiving of another device.

FIG. 8 is an example flowchart of an information transmission method according to an embodiment of this application. The method may include the following operations. In the embodiment shown in FIG. 8, a first communication apparatus may be a measurement initiator, for example, a ranging initiator, a sensing initiator, or a positioning initiator, or a first communication apparatus may be a measurement responder, for example, a ranging responder, a sensing responder, or a positioning responder. Similarly, a second communication apparatus may be a measurement responder. It may be understood that, when the first communication apparatus is the measurement initiator, the second communication apparatus may be the measurement responder, or when the first communication apparatus is the measurement responder, the second communication apparatus may be the measurement initiator.

S801: The first communication apparatus sends first information to the second communication apparatus.

Correspondingly, the second communication apparatus receives the first information from the first communication apparatus.

The first information may be used to trigger one or more of ranging, positioning, or sensing. For example, the first information may be a poll (poll) message.

S802: The second communication apparatus sends a number of fragments of a UWB signal to the first communication apparatus.

Correspondingly, the first communication apparatus receives the number of fragments of the UWB signal from the second communication apparatus.

In a possible implementation, the first information may include second information. The second information may be used to request the number of fragments of the UWB signal. For example, the second information is 1-bit information. When a value of the second information is 1, the second information may be used to request the number of fragments of the UWB signal, or when a value of the second information is 0, the second information is not used to request the number of fragments of the UWB signal. In this case, the first information may be considered as a poll message. On the contrary, when a value of the second information is 0, the second information may be used to request the number of fragments of the UWB signal, or when a value of the second information is 1, the second information is not used to request the number of fragments of the UWB signal. In this case, the first information may be considered as a poll message.

Optionally, the second information may be a newly added field. For example, the first information may be a poll message, and a frame format of the poll message may be shown in the PPDU shown in Table 5. The second information may be a newly added field in the PPDU. For another example, the first information may be a compressed PSDU, and a frame format may be shown in the compressed PSDU shown in Table 1. The second information may be a newly added field in the compressed PSDU.

It may be understood that a location of the second information is not specifically limited in this specification.

The following describes the newly added second information in Table 16.

**Table 16: Example of the first information**

| | | | |
|---|---|---|---|
| Octet (octets): 1 | 2 | 1 | 2 |
| Message identification | Address | Second information | CRC |

As shown in Table 16, the second information may be after the address field and before the CRC field. It should be understood that a name of the second information is not limited in this specification. For example, the name of the second information may be poll with 1-octet piggybacking information (poll with 1-octet piggybacking information) or another name.

The second information may indicate whether to request the number of fragments of the UWB signal. In other words, the second information may indicate whether to request an RNF. The following describes a frame format of the second information in Table 17.

**Table 17: Example of the frame format of the second information**

| | |
|---|---|
| Bit (bits): 0 | 2 to 7 |
| RNF request (request) | Reserved (reserved) |

In Table 17, the RNF request field may indicate whether to request the RNF. For example, when a value of the RNF request field is 0, it indicates not to request the RNF, or when a value of the RNF request field is 1, it indicates to request the RNF. On the contrary, when a value of the RNF request field is 1, it indicates not to request the RNF, or when a value of the RNF request field is 0, it indicates to request the RNF.

In another possible case, an existing field in the first information is reused as the second information. For example, the first information may be a poll message, and a frame format of the poll message may be shown in the PPDU shown in Table 5. A field in the PPDU, for example, one or both of the SHR or the PHR, may be reused as the second information. For another example, the first information may be a compressed PSDU, and a frame format may be shown in the compressed PSDU shown in Table 1. A field in the compressed PSDU, for example, one or more of the message identification field, the address field, the content field, or the cyclic redundancy check field, may be reused as the second information.

In this specification, the first information may further include fourth information, and the fourth information may indicate whether the first information includes the second information. For example, the fourth information is 1-bit information. When a value of the fourth information is 0, it may indicate that the first information does not include the second information, or when a value of the fourth information is 1, it may indicate that the first information includes the second information. On the contrary, when a value of the fourth information is 1, it may indicate that the first information does not include the second information, or when a value of the fourth information is 0, it may indicate that the first information includes the second information.

Similarly, the fourth information may be a newly added field in the first information, or an existing field in the first information may be reused. Refer to the implementation of the foregoing second information.

In a possible implementation, the fourth information may be implemented through a combination of the message identification field and the frame length field, to reduce consumption of the message identification field. For a manner of implementing the fourth information by the message identification field and the frame length field, refer to the implementation of the manner of implementing the third information by the message identification field and the frame length field shown in Table 7. Details are not described herein again.

The following uses an example in which the frame length field=6 and the message identification field=0x00 for description.

**Table 18: Example of the first information**

| Frame length (unit: octet) | Message identification | Message meaning and content | Duty cycle (a 250 kbit/s O-QPSK NB PHY is used) |
|---|---|---|---|
| 5 | 0x00 | Poll message | 35.2% |
| 6 | | Poll with piggybacking information | 38.4% |

As shown in Table 18, when the frame length field=5, the message identification field=0x00 indicates that the first information includes only the poll message. When the frame length field=6, the message identification field=0x00 indicates that the first message includes the poll with 1-octet piggybacking information, for example, includes the second information. In this case, a total length of the first information is 6 octets, and the first information carries the second information, to request the number of fragments of the UWB signal. It can be seen from Table 18 that, when whether the first information includes the second information is indicated by the frame length field and the message identification field, the duty cycle is 38.4%, and is less than 50%. This can effectively shorten an NB air interface transmission time, and reduce interference to another device.

In another possible implementation, after receiving the first information, the second communication apparatus may perform CRC check on the first information, to indicate, based on different CRC check results, whether the first information includes the second information. For example, if CRC check on the first information received by the second communication apparatus succeeds, a message received by the second communication apparatus is that the first information does not include the second information. If check is performed and succeeds after bitwise inversion is performed on the CRC field in the first information received by the second communication apparatus, a message received by the second communication apparatus is that the first information carries the second information. For another example, if the first communication apparatus receives the first information and CRC check fails, and if check is performed and still fails after bitwise inversion is performed on the CRC field, the first communication apparatus may discard the received first information.

In the foregoing case, the compressed PSDU may not include the content field. The following describes a frame format of the first information in Table 19.

**Table 19: Example of the frame format of the first information**

| | | | |
|---|---|---|---|
| Octet (octets): 1 | 2 | 0 | 2 |
| Message identification | Address | No content (null data) | CRC |

As shown in Table 19, through comparison with the frame format of the compressed PSDU shown in Table 1, it can be seen that the content field is empty when whether the first information includes the second information is determined based on the CRC check result.

Optionally, in this embodiment of this application, the first information may further include the third information. The third information may indicate channel occupation of a non-UWB signal, for example, a Wi-Fi signal or a Bluetooth signal. Similarly, the third information may be a newly added field in the first information, or an existing field in the first information may be reused. Details are not described herein again. The following uses an example in which the third information is the newly added field in the first information for description.

**Table 20: Example of the frame format of the first information**

| | | | |
|---|---|---|---|
| Octet (octets): 1 | 2 | 2 | 2 |
| Message ID | Address | Third information | CRC |

As shown in Table 20, the third information may be after the address field and before the CRC field. It should be understood that a name of the third information is not limited in this specification. For example, the name of the third information may be poll with 2-octet piggybacking information (poll with 2-octet piggybacking information) or another name.

The third information may indicate the channel occupation of the non-UWB signal. The following describes a frame format of the third information in Table 21 as an example.

**Table 21: Example of the frame format of the third information**

| Bit (bits): 1 to 12 | 13 to 15 |
|---|---|
| Channel occupation of the non-UWB signal | Reserved (reserved) |

As shown in Table 21, the third information may carry the channel occupation of the non-UWB signal. Optionally, the channel occupation of the non-UWB signal may be implemented based on an NB channel map, for example, an adaptive frequency hopping (adaptive frequency hopping, AFH) map (map). It may be understood that a frame format of the AFH map is not limited in embodiments of this application. A feasible format is shown in Table 22 below.

**Table 22: Example of the frame format of the AFH map**

| Bit (bits): 1 to 4 | 5 to 10 | 11 and 12 |
|---|---|---|
| Wi-Fi non-occupied channels (Wi-Fi non-occupied channels) | Wi-Fi channels (Wi-Fi channels) | Scaling factor (Scaling Factor) |

In Table 22, the Wi-Fi non-occupied channels field indicates a channel that is not occupied by Wi-Fi, that is, can be used by a UWB. The Wi-Fi channels field indicates a channel used for Wi-Fi. The scaling factor indicates a ratio of a shielded bandwidth of a Wi-Fi channel to a total bandwidth of the Wi-Fi channel. For example, it is assumed that the bandwidth of the Wi-Fi channel is 20 MHz, and a scaling factor value is 3/4. It means that a bandwidth of 20*3/4=15 MHz is shielded and cannot be used for Wi-Fi.

Optionally, Table 21 and Table 17 may be implemented in combination, as shown in Table 23.

**Table 23: Example of the frame format of the third information**

| Bit (bits): 0 | 1 to 12 | 13 to 15 |
|---|---|---|
| RNF request | AFH map | Reserved (reserved) |

For the RNF request field in Table 23, refer to Table 17. Details are not described herein again. The AFH map field in Table 23 is shown in Table 22, and is used to assist in mitigating interference between the UWB and Wi-Fi.

In a possible case, the first information may further include fifth information, and the fifth information may indicate whether the first information includes the third information. Similarly, the fifth information may be a newly added field in the first information, or an existing field in the first information may be reused. Details are not described herein again.

In a possible implementation, the fifth information may be implemented through a combination of the message identification field and the frame length field, to reduce consumption of the message identification field. For a manner of implementing the fifth information by the message identification field and the frame length field, refer to the implementation of the manner shown in Table 7. Details are not described herein again.

The following uses an example in which the frame length field=6 and the message identification field=0x00 for description, and the second information is described in Table 24.

**Table 24: Example of the first information**

| Frame length (unit: octet) | Message identification | Message meaning and content | Duty cycle (a 250 kbit/s O-QPSK NB PHY is used) |
|---|---|---|---|
| 5 | 0x00 | Poll message | 35.2% |
| 6 | | Poll with 1-octet piggybacking information | 38.4% |
| 7 | | Poll with 2-octet piggybacking information | 41.6% |

As shown in Table 24, when the frame length field=5, the message identification field=0x00 indicates that the first information includes only the poll message. When the frame length field=6, the message identification field=0x00 indicates that the first message includes the poll with 1-octet piggybacking information, for example, includes the second information. In this case, a total length of the first information is 6 octets, and the first information carries the second information, to request the number of fragments of the UWB signal. It can be seen from Table 24 that, when whether the first information includes the second information is indicated by the frame length field and the message identification field, the duty cycle is 38.4%, and is less than 50%. This can effectively shorten an NB air interface transmission time, and reduce interference to another device.

It can be seen from Table 24 that, when the frame length field=7, the message identification field=0x00 indicates that the first information includes the third information. In this case, a total length of the first information is 7 octets. The first information carries the second information to request the number of fragments of the UWB signal, and the first information carries the third information to indicate the channel occupation of the non-UWB signal. It can be seen from Table 24 that, when whether the first information includes the third information is indicated by the frame length field and the message identification field, the duty cycle is 41.6%, and is less than 50%. This can effectively shorten an NB air interface transmission time, and reduce interference to another device.

It should be noted that uploading one measurement result is merely described in this embodiment of this application, for example, uploading one TOF/RT/RTT/GRTC measurement result. This embodiment of this application is also applicable to a case of uploading a plurality of measurement results, for example, n TOF/RT/RTT/GRTC measurement results, where n is a positive integer greater than 1. In this case, the method in this embodiment of this application is also applicable. Details are not described herein again.

It may be understood that the embodiment shown in FIG. 8 may be separately implemented, or may be implemented in combination with the embodiment shown in FIG. 7.

The following describes, with reference to accompanying drawings, communication apparatuses for implementing the foregoing methods in embodiments of this application. Therefore, all the foregoing content may be used in the following embodiments. Repeated content is not described again.

FIG. 9 is a block diagram of a communication apparatus 900 according to an embodiment of this application. The communication apparatus 900 may correspondingly implement functions or steps implemented by the first communication apparatus or the second communication apparatus in the foregoing method embodiments. The communication apparatus may include a processing unit 910 and a transceiver unit 920. Optionally, a storage unit may be further included. The storage unit may be configured to store instructions (code or a program) and/or data. The processing unit 910 and the transceiver unit 920 may be coupled to the storage unit. For example, the processing unit 910 may read the instructions (the code or the program) and/or the data in the storage unit, to implement a corresponding method. The foregoing units may be independently disposed, or may be partially or completely integrated.

In some possible implementations, the communication apparatus 900 can correspondingly implement behavior and functions of the first communication apparatus in the foregoing method embodiments. For example, the communication apparatus 900 may be the first communication apparatus, or may be a component (for example, a chip or a circuit) used in the first communication apparatus. The transceiver unit 920 may be configured to perform all receiving or sending operations performed by the first communication apparatus in the embodiment shown in FIG. 7, for example, S701 and S702 in the embodiment shown in FIG. 7, and/or configured to support another process of the technology described in this specification. The processing unit 910 is configured to perform all operations performed by the first communication apparatus in the embodiment shown in FIG. 7 except receiving and sending operations, and/or configured to support another process of the technology described in this specification.

For example, the processing unit 910 is configured to generate a first UWB signal. The transceiver unit is configured to send the first UWB signal to the second communication apparatus, where the first UWB signal is used for one or more of ranging, positioning, or sensing. The transceiver unit 920 is further configured to receive first information from the second communication apparatus, where the first information includes second information and a measurement result, and the second information indicates a type of the measurement result. The measurement result is obtained by measuring the first UWB signal.

In some possible implementations, the communication apparatus 900 can correspondingly implement behavior and functions of the first communication apparatus in the foregoing method embodiments. For example, the communication apparatus 900 may be the first communication apparatus, or may be a component (for example, a chip or a circuit) used in the first communication apparatus. The transceiver unit 920 may be configured to perform all receiving or sending operations performed by the first communication apparatus in the embodiment shown in FIG. 8, for example, S801 and S802 in the embodiment shown in FIG. 8, and/or configured to support another process of the technology described in this specification. The processing unit 910 is configured to perform all operations performed by the first communication apparatus in the embodiment shown in FIG. 8 except receiving and sending operations, and/or configured to support another process of the technology described in this specification.

For example, the processing unit 910 is configured to generate first information. The transceiver unit 920 is configured to send the first information to the second communication apparatus, where the first information is used to trigger one or more of ranging, positioning, or sensing. The first information further includes second information, the second information is used to request a number of fragments of a UWB signal, and the UWB signal is used for one or more of ranging, positioning, or sensing. The transceiver unit 920 is further configured to receive the number of fragments of the UWB signal from the second communication apparatus.

In some possible implementations, the communication apparatus 900 can correspondingly implement behavior and functions of the second communication apparatus in the foregoing method embodiments. For example, the communication apparatus 900 may be the second communication apparatus, or may be a component (for example, a chip or a circuit) used in the second communication apparatus. The transceiver unit 920 may be configured to perform all receiving or sending operations performed by the second communication apparatus in the embodiment shown in FIG. 7, for example, S701 and S702 in the embodiment shown in FIG. 7, and/or configured to support another process of the technology described in this specification. The processing unit 910 is configured to perform all operations performed by the second communication apparatus in the embodiment shown in FIG. 7 except receiving and sending operations, and/or configured to support another process of the technology described in this specification.

For example, the transceiver unit 920 is configured to receive a first UWB signal from the first communication apparatus, where the first UWB signal is used for one or more of ranging, positioning, or sensing. The processing unit 910 is configured to measure the first UWB signal to obtain a measurement result. The transceiver unit 920 is further configured to send first information to the first communication apparatus, where the first information includes second information and the measurement result, and the second information indicates a type of the measurement result.

In some possible implementations, the communication apparatus 900 can correspondingly implement behavior and functions of the second communication apparatus in the foregoing method embodiments. For example, the communication apparatus 900 may be the second communication apparatus, or may be a component (for example, a chip or a circuit) used in the second communication apparatus. The transceiver unit 920 may be configured to perform all receiving or sending operations performed by the second communication apparatus in the embodiment shown in FIG. 8, for example, S801 and S802 in the embodiment shown in FIG. 8, and/or configured to support another process of the technology described in this specification. The processing unit 910 is configured to perform all operations performed by the second communication apparatus in the embodiment shown in FIG. 8 except receiving and sending operations, and/or configured to support another process of the technology described in this specification.

For example, the transceiver unit 920 is configured to receive first information from the first communication apparatus, where the first information is used to trigger one or more of ranging, positioning, or sensing. The first information further includes second information, the second information is used to request a number of fragments of a UWB signal, and the UWB signal is used for one or more of ranging, positioning, or sensing. The processing unit 910 is configured to determine the number of fragments of the UWB signal. The transceiver unit 920 is further configured to send the number of fragments of the UWB signal to the first communication apparatus.

For operations performed by the processing unit 910 and the transceiver unit 920, refer to the related descriptions in the foregoing method embodiments.

It should be understood that the processing unit 910 in this embodiment of this application may be implemented by a processor or a processor-related circuit component, and the transceiver unit 920 may be implemented by a transceiver, a transceiver-related circuit component, or a communication interface.

Based on a same concept, as shown in FIG. 10, an embodiment of this application provides a communication apparatus 1000. The communication apparatus 1000 includes a processor 1010. Optionally, the communication apparatus 1000 may further include a memory 1020, configured to: store instructions executed by the processor 1010, or store input data required by the processor 1010 to run instructions, or store data generated after the processor 1010 runs instructions. The processor 1010 may implement the methods shown in the foregoing method embodiments based on the instructions stored in the memory 1020.

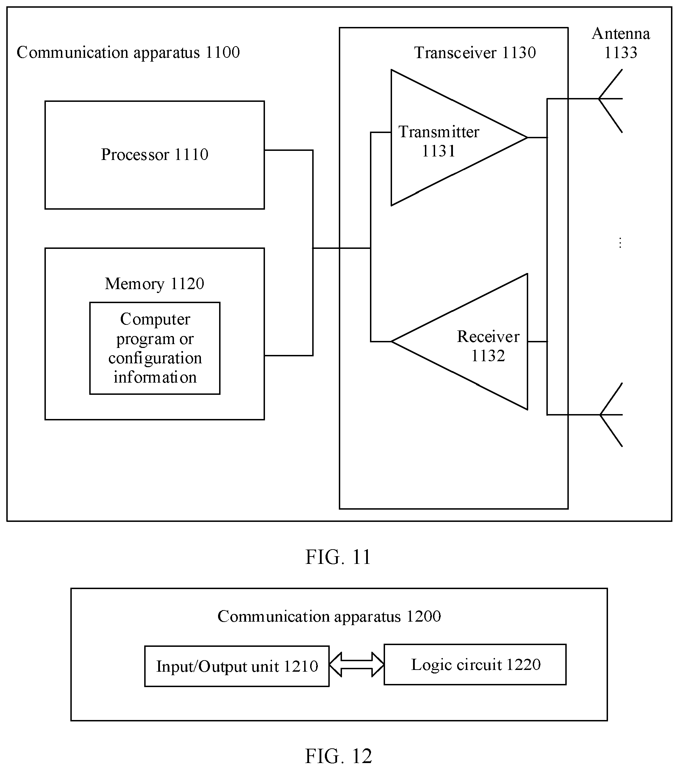

Based on a same concept, as shown in FIG. 11, an embodiment of this application provides a communication apparatus 1100. The communication apparatus 1100 may be a chip or a chip system. Optionally, in this embodiment of this application, the chip system may include a chip, or may include a chip and another discrete device.

The communication apparatus 1100 may include at least one processor 1110. The processor 1110 is coupled to a memory. Optionally, the memory may be located inside the apparatus, or may be located outside the apparatus. For example, the communication apparatus 1100 may further include at least one memory 1120. The memory 1120 stores a necessary computer program, configuration information, a computer program or instructions, and/or data for implementing any one of the foregoing embodiments. The processor 1110 may execute the computer program stored in the memory 1120, to complete the method in any one of the foregoing embodiments.

Coupling in embodiments of this application is indirect coupling or a communication connection between apparatuses, units, or modules, may be in an electrical form, a mechanical form, or another form, and is used for information exchange between the apparatuses, the units, or the modules. The processor 1110 may cooperate with the memory 1120. A specific connection medium between the transceiver 1130, the processor 1110, and the memory 1120 is not limited in embodiments of this application.

The communication apparatus 1100 may further include the transceiver 1130, and the communication apparatus 1100 may exchange information with another device through the transceiver 1130. The transceiver 1130 may be a circuit, a bus, a transceiver, or any other apparatus that can be configured to exchange information, or is referred to as a signal transceiver unit. As shown in FIG. 11, the transceiver 1130 includes a transmitter 1131, a receiver 1132, and an antenna 1133. In addition, when the communication apparatus 1100 is a chip-type apparatus or a circuit, the transceiver in the communication apparatus 1100 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 1100 may be used in a first communication apparatus. Specifically, the communication apparatus 1100 may be the first communication apparatus, or may be an apparatus that can support the first communication apparatus to implement a function of the first communication apparatus in any one of the foregoing embodiments. The memory 1120 stores a necessary computer program, a computer program or instructions, and/or data for implementing a function of the first communication apparatus in any one of the foregoing embodiments. The processor 1110 may execute the computer program stored in the memory 1120, to complete the method performed by the first communication apparatus in any one of the foregoing embodiments.

In a possible implementation, the communication apparatus 1100 may be used in a second communication apparatus. Specifically, the communication apparatus 1100 may be the second communication apparatus, or may be an apparatus that can support the second communication apparatus to implement a function of the second communication apparatus in any one of the foregoing embodiments. The memory 1120 stores a necessary computer program, a computer program or instructions, and/or data for implementing a function of the second communication apparatus in any one of the foregoing embodiments. The processor 1110 may execute the computer program stored in the memory 1120, to complete the method performed by the second communication apparatus in any one of the foregoing embodiments.

The communication apparatus 1100 provided in this embodiment may be used in the first communication apparatus to complete the method performed by the first communication apparatus, or may be used in the second communication apparatus to complete the method performed by the second communication apparatus. Therefore, for technical effect that can be achieved by this embodiment, refer to the foregoing method embodiments. Details are not described herein again.

In embodiments of this application, the processor may be a general-purpose processor, a digital signal processor, an application-specific integrated circuit, a field-programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed and completed by a hardware processor, or may be performed and completed by a combination of hardware in the processor and a software module.

In embodiments of this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 12. Based on the foregoing embodiments, an embodiment of this application further provides another communication apparatus 1200, including an input/output unit 1210 and a logic circuit 1220. The input/output unit 1210 is configured to receive code instructions and transmit the code instructions to the logic circuit 1220. The logic circuit 1220 is configured to run the code instructions to perform the method performed by the first communication apparatus or the second communication apparatus in any one of the foregoing embodiments.

The following describes in detail operations performed when the communication apparatus is used in the first communication apparatus or the second communication apparatus.

In an optional implementation, the communication apparatus 1200 may be used in the first communication apparatus to perform the method performed by the first communication apparatus, specifically, for example, the method performed by the first communication apparatus in the embodiment shown in FIG. 7.

For example, the logic circuit 1220 is configured to generate a first UWB signal. The input/output unit 1210 is configured to output the first UWB signal to the second communication apparatus, where the first UWB signal is used for one or more of ranging, positioning, or sensing. The input/output unit 1210 is further configured to input first information from the second communication apparatus, where the first information includes second information and a measurement result, and the second information indicates a type of the measurement result. The measurement result is obtained by measuring the first UWB signal.

In an optional implementation, the communication apparatus 1200 may be used in the first communication apparatus to perform the method performed by the first communication apparatus, specifically, for example, the method performed by the first communication apparatus in the embodiment shown in FIG. 8.

For example, the logic circuit 1220 is configured to generate first information. The input/output unit 1210 is configured to output the first information to the second communication apparatus, where the first information is used to trigger one or more of ranging, positioning, or sensing. The first information further includes second information, the second information is used to request a number of fragments of a UWB signal, and the UWB signal is used for one or more of ranging, positioning, or sensing. The input/output unit 1210 is further configured to input the number of fragments of the UWB signal from the second communication apparatus.

In an optional implementation, the communication apparatus 1200 may be used in the second communication apparatus to perform the method performed by the second communication apparatus, specifically, for example, the method performed by the first communication apparatus in the embodiment shown in FIG. 7.

The input/output unit 1210 is configured to input a first UWB signal from the first communication apparatus, where the first UWB signal is used for one or more of ranging, positioning, or sensing. The logic circuit 1220 is configured to measure the first UWB signal to obtain a measurement result. The input/output unit 1210 is further configured to output first information to the first communication apparatus, where the first information includes second information and a measurement result, and the second information indicates a type of the measurement result.

In an optional implementation, the communication apparatus 1200 may be used in the second communication apparatus to perform the method performed by the second communication apparatus, specifically, for example, the method performed by the first communication apparatus in the embodiment shown in FIG. 7.

The input/output unit 1210 is configured to input first information from the first communication apparatus, where the first information is used to trigger one or more of ranging, positioning, or sensing. The first information further includes second information, the second information is used to request a number of fragments of a UWB signal, and the UWB signal is used for one or more of ranging, positioning, or sensing. The logic circuit 1220 is configured to determine the number of fragments of the UWB signal. The input/output unit 1210 is further configured to output the number of fragments of the UWB signal to the first communication apparatus.

The communication apparatus 1200 provided in this embodiment may be used in the first communication apparatus to complete the method performed by the first communication apparatus, or may be used in the second communication apparatus to complete the method performed by the second communication apparatus. Therefore, for technical effect that can be achieved by this embodiment, refer to the foregoing method embodiments. Details are not described herein again.

Based on the foregoing embodiments, an embodiment of this application further provides a communication system. The communication system includes at least one communication apparatus used in a first communication apparatus and at least one communication apparatus used in a second communication apparatus. For technical effect that can be achieved, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the first communication apparatus or the method performed by the second communication apparatus in any one of the foregoing embodiments is implemented. The computer-readable storage medium may include any medium that can store program code, such as a USB flash drive, a removable hard disk drive, a read-only memory, a random access memory, a magnetic disk, or an optical disc.

To implement functions of the communication apparatuses in FIG. 9 to FIG. 12, an embodiment of this application further provides a chip, including a processor, configured to support the communication apparatus in implementing functions of the first communication apparatus or the second communication apparatus in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. An information transmission method, comprising:
receiving a first ultra-wideband UWB signal from a first communication apparatus, wherein the first UWB signal is used for one or more of ranging, positioning, or sensing; and
sending first information to the first communication apparatus, wherein the first information comprises second information and a measurement result, the second information indicates a type of the measurement result, and the measurement result is obtained by measuring the first UWB signal.

2. The method according to claim 1, wherein the type comprises one or more of a time of flight, a reply time, a round trip time, and a gap of reply time correction.

3. The method according to claim 1 or 2, wherein the first information further comprises a frame length field and a message identification field, and the frame length field and the message identification field indicate that the first information comprises the second information.

4. The method according to any one of claims 1 to 3, wherein the second information comprises a first field, and the first field indicates that the measurement result is not segmented; or
the second information comprises a second field, and the second field indicates that the first information carries an i^{th} subpart obtained by segmenting the measurement result into a plurality of subparts, wherein i is a positive integer.

5. The method according to any one of claims 1 to 4, wherein the first information further comprises third information, the third information indicates a number of fragments of a second UWB signal, the second UWB signal is used for one or more of ranging, positioning, or sensing, and a sending time of the second UWB signal is later than a sending time of the first UWB signal.

6. The method according to claim 5, wherein the first information further comprises control information, and the control information indicates that the first information comprises the third information.

7. An information transmission method, comprising:
receiving first information from a first communication apparatus, wherein the first information is used to trigger one or more of ranging, positioning, or sensing, the first information comprises second information, the second information is used to request a number of fragments of a UWB signal, and the UWB signal is used for one or more of ranging, positioning, or sensing; and
sending the number of fragments of the UWB signal to the first communication apparatus based on the second information.

8. The method according to claim 7, wherein the first information further comprises third information, and the third information indicates channel occupation of a non-UWB signal.

9. The method according to claim 8, wherein the third information comprises an NB channel map, and the NB channel map indicates the channel occupation of the non-UWB signal.

10. The method according to any one of claims 7 to 9, wherein the method further comprises:
determining, based on cyclic redundancy check CRC information of the first information, that the first information comprises the second information.

11. The method according to any one of claims 7 to 10, wherein the first information further comprises a frame length field and a message identification field, and the frame length field and the message identification field indicate that the first information comprises the second information.

12. An information transmission method, comprising:
sending a first ultra-wideband UWB signal to a second communication apparatus, wherein the first UWB signal is used for one or more of ranging, positioning, or sensing; and
receiving first information from the second communication apparatus, wherein the first information comprises second information and a measurement result, the second information indicates a type of the measurement result, and the measurement result is obtained by the second communication apparatus measuring the first UWB signal.

13. The method according to claim 12, wherein the type comprises one or more of a time of flight, a reply time, a round trip time, and a gap of reply time correction.

14. The method according to claim 12 or 13, wherein the first information further comprises a frame length field and a message identification field, and the frame length field and the message identification field indicate that the first information comprises the second information.

15. The method according to any one of claims 12 to 14, wherein the second information comprises a first field, and the first field indicates that the measurement result is not segmented; or
the second information comprises a second field, and the second field indicates that the first information carries an i^{th} subpart obtained by segmenting the measurement result into a plurality of subparts, wherein i is a positive integer.

16. The method according to any one of claims 12 to 15, wherein the first information further comprises third information, the third information indicates a number of fragments of a second UWB signal, the second UWB signal is used for one or more of ranging, positioning, or sensing, and a sending time of the second UWB signal is later than a sending time of the first UWB signal.

17. The method according to claim 16, wherein the first information further comprises control information, and the control information indicates that the first information comprises the third information.

18. An information transmission method, comprising:
sending first information to a second communication apparatus, wherein the first information is used to trigger one or more of ranging, positioning, or sensing, the first information further comprises second information, the second information is used to request a number of fragments of a UWB signal, and the UWB signal is used for one or more of ranging, positioning, or sensing; and
receiving the number of fragments of the UWB signal sent by the second communication apparatus based on the second information.

19. The method according to claim 18, wherein the first information further comprises third information, and the third information indicates channel occupation of a non-UWB signal.

20. The method according to claim 19, wherein the third information comprises an NB channel map, and the NB channel map indicates the channel occupation of the non-UWB signal.

21. The method according to any one of claims 18 to 20, wherein cyclic redundancy check CRC information of the first information indicates whether the first information comprises the second information.

22. The method according to any one of claims 18 to 20, wherein the first information further comprises a frame length field and a message identification field, and the frame length field and the message identification field indicate that the first information comprises the second information.

23. A communication apparatus, comprising a unit configured to perform the method according to any one of claims 1 to 6, a unit configured to perform the method according to any one of claims 7 to 11, a unit configured to perform the method according to any one of claims 12 to 17, or a unit configured to perform the method according to any one of claims 18 to 22.

24. A communication apparatus, comprising a processor and a memory, wherein
the memory is configured to store a computer program or instructions; and
the processor is configured to execute the computer program or instructions in the memory, to enable the apparatus to perform the method according to any one of claims 1 to 6, or enable the apparatus to perform the method according to any one of claims 7 to 11, or enable the apparatus to perform the method according to any one of claims 12 to 17, or enable the apparatus to perform the method according to any one of claims 18 to 22.

25. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 6, the electronic apparatus is enabled to perform the method according to any one of claims 7 to 11, the electronic apparatus is enabled to perform the method according to any one of claims 12 to 17, or the electronic apparatus is enabled to perform the method according to any one of claims 18 to 22.

26. A computer program product, comprising computer-executable instructions, wherein when the computer-executable instructions are run on a computer, the computer is enabled to perform the method according to any one of claims 1 to 6, the computer is enabled to perform the method according to any one of claims 7 to 11, the computer is enabled to perform the method according to any one of claims 12 to 17, or the computer is enabled to perform the method according to any one of claims 18 to 22.
